# EUROPÄISCHE PATENTSCHRIFT

(11) **EP 4 160 064 B1**
(45) Veröffentlichungstag und Bekanntmachung des Hinweises auf die Patenterteilung: **08.04.2026**
(21) Anmeldenummer: 22199047.6
(22) Anmeldetag: 30.09.2022
(51) Int. Cl.: F16K 31/06, F16K 27/02, F16K 1/52

(54) **EINSATZ VON MAGNETVENTILEN IN ZAPFANLAGEN FÜR KOHLENSÄUREHALTIGE GETRÄNKE**
USE OF SOLENOID VALVES IN DISPENSING SYSTEMS FOR CARBONATED BEVERAGES
UTILISATION D'ÉLECTROVANNES DANS DES DISTRIBUTEURS DE BOISSONS GAZEUSES

(30) Priorität: 02.10.2021 DE 202021003107 U
(43) Veröffentlichungstag der Anmeldung: 05.04.2023
(73) Patentinhaber: Samson Regulation S.A.S., 69120 Vaulx-en-Velin (FR)
(72) Erfinder: ZUCHT, Manfred, 8552 Eibiswald (AT)
(74) Vertreter: Lohr, Jöstingmeier & Partner Patent- und Rechtsanwälte mbB

(56) Entgegenhaltungen:
- DE-A1- 102006 003 543
- JP-A- S5 947 577
- US-A- 4 336 896
- US-A- 4 835 426

## Beschreibung

### Technisches Gebiet

Die Erfindung betrifft eine elektromechanische Ventilanordnung einer Zapfanlagen für kohlensäurehaltige Getränke.

### Stand der Technik

Zur Reglung von Fluidströmen, beispielsweise bei Zapfanlagen werden unteranderem elektromechanische Ventile eingesetzt. Häufig kann bei diesen Ventilen der Strömungswiderstand und der Druck nur mit hohem Aufwand oder nur ungenau eingestellt werden. So kann es sein, dass ein Getränk entweder mit einem zu hohen Druck oder einem zu geringen Druck gezapft wird. Beides führt zu Qualitätseinbußen, Getränkeverlusten und reduziertem Getränkeausstoß pro Zeiteinheit.

US 4,835,426 A betrifft eine elektromechanische Ventilanordnung gemäß dem Oberbegriff des Anspruchs 1.

JP S 59 47577 A betrifft ein Ventil mit einem Bypass-Pfad.

DE 10 2006 003543 A1 betrifft ein stromlos geschlossenes Magnetventil.

### Darstellung der Erfindung

Der Erfindung liegt daher die Aufgabe zugrunde ein kostengünstige, zuverlässige, leicht einstellbare und regulierbare Ventilanordnung für kohlensäurehaltige Getränke bereitzustellen.

Diese Aufgabe wird durch eine Ventilanordnung nach Anspruch 1 gelöst. Vorteilhafte Ausgestaltungen der Erfindung sind in den Unteransprüchen angegeben. Die Ventilanordnung hat ein elektromechanische Schaltventil, dass hierin zur lediglich sprachlichen Abgrenzung auch als *"erstes Ventil"* bezeichnet wird. Das erste Ventil ist in der Ventilanordnung mit einem Steuerventil in Reihe geschaltet.

Das Steuerventil wird hierin auch als *"zweites Ventil"* bezeichnet.

Das erste Ventil hat ein erstes Ventilgehäuse mit einer ersten Ventilhülse, einem ersten festen Anker, einer ersten Einlassöffnung und einer ersten Auslassöffnung. Die erste Ventilhülse definiert eine erste Ventilachse. Die erste Ventilachse kann der Längsachse der Ventilhülse entsprechen. Ein erster Strömungspfad, verbindet die erste Einlassöffnung mit der ersten Auslassöffnung. Wie allgemein bekannt ist ein Strömungspfad eine Verbindung, die eine Strömung eines Fluids von einem ersten Punkt zu einem zweiten Punkt gestattet.

Die erste Ventilhülse hat einen ersten Ventilsitz, der eine erste Ventilsitzöffnung umgibt und den ersten Strömungspfad in einen ersten Abschnitt und einen weiteren Abschnitt teilt.

Das erste Ventil hat einen ersten beweglichen Anker. Der erste bewegliche Anker ist vorzugsweise entlang der ersten Ventilachse in dem ersten Ventilgehäuse zwischen einer ersten Geschlossenstellung und einer ersten Offenstellung verschiebbar gelagert. Alternativ oder zusätzlich kann der erste bewegliche Anker in Bezug auf die erste Ventilachse einen Winkel von 30° - 90°, insbesondere 60° bis 90° aufweisen. Ein Winkel von 90° ist besonders bevorzugt, wobei Abweichungen von ±15° oder ±10°, oder ±5° oder ±2.5° oder ±1° zulässig sind und kleinere Abweichungen bevorzugt sind. In der ersten Geschlossenstellung verschließt der erste bewegliche Anker die erste Ventilsitzöffnung und in der ersten Offenstellung wird der erste Strömungspfad durch die erste Ventilsitzöffnung freigegeben. Ein erster elektromechanischer Antrieb ist in einer Wirkverbindung mit dem ersten beweglichen Anker. Der erster elektromechanischer Antrieb kann folglich den ersten beweglichen Anker zwischen der ersten Offenstellung und der ersten Geschlossenstellung verschieben. Beispielsweise kann sich der erste bewegliche Anker über ein elastisches Vorspannelement zumindest mittelbar am ersten festen Anker abstützen. Alternativ oder zusätzlich kann der erste Anker para- oder ferromagnetisch sein. Durch Anlegen eines Magnetfeldes (z.B. durch Bestromen eines optionalen auf dem Ventilgehäuse sitzenden primären Elektromagneten - nachfolgend kurz "Elektromagnet" dieser ist von einem nachfolgenden sekundären Elektromagneten zu unterscheiden) kann der erste bewegliche Anker gegen eine von dem Vorspannelement ausgeübte Rückstellkraft in Richtung des ersten festen Ankers in eine sogenannte Endlage (z.B. in seine Offenstellung, alternativ in sein Geschlossenstellung) verschoben werden. Wird der primäre Elektromagnet abgeschaltet, kann der erste bewegliche Anker durch die von dem Vorspannelement auf ihn ausgeübte Rückstellkraft und/oder einen Aktuator in seine Ausgangslage zurückverschoben werden.

Auch andere Antriebsarten sind möglich, der Aktuator z.B. kann ein sekundärer elektromagnetischer Antrieb sein. Der Aktuator kann beispielsweise mit einer Steuerung verbunden sein, welche den Aktuator ansteuert, z.B. so dass der Aktuator den zweiten Anker in Richtung der entsprechenden Ausgangslage mit einer durch eine Steuerung einstellbaren Kraft beaufschlagt. Der Aktuator kann z.B. ein sekundärer Elektromagnet sein. Der sekundäre Elektromagnet kann am zweiten Anker angeordnet sein. Der sekundäre Elektromagnet kann an einer Außenfläche des zweiten Ankers, in einem ersten Abschnitt oder in einem zweiten Abschnitt des zweiten Ankers angeordnet sein. Der sekundäre Elektromagnet kann zudem innerhalb des zweiten Ankers, in einem ersten Abschnitt oder in einem zweiten Abschnitt des zweiten Ankers und an einer Innenwandung des zweiten Ankers angeordnet sein.

Bei einem stromlos geschlossenen Magnetventil ist der Ventilsitz auf der dem ersten beweglichen Anker abgewandten Seite des Ventilgehäuses angeordnet, d.h. die oben als Ausgangslage bezeichnete Position des ersten beweglichen Ankers ist seine Geschlossenstellung. Der elektromechanische Antrieb kann daher eine in Richtung des Ventilsitzes wirkende Kraft auf den ersten Anker ausüben. Die Endlage bei eingeschaltetem Magneten ist dann die Offenstellung des ersten beweglichen Ankers. Bei einem stromlos offenen Magnetventil ist der Ventilsitz am ersten festen Anker angeordnet oder zwischen dem ersten festen Anker und dem ersten beweglichen Anker, so dass der Ventilsitz durch den ersten beweglichen Anker in dessen Endlage verschlossen wird. Bei einem stromlos offenen Magnetventil ist daher die Endlage die Geschlossenstellung und die Ausgangslage die Offenstellung. Der elektromechanische Antrieb übt in diesem Fall eine von dem Ventilsitz weg weisende Kraft auf den ersten beweglichen Anker aus.

Unter dem Begriff "magnetisch" wird hier sowohl weichmagnetisch, - in diesem Fall kann der Elektromagnet mit Wechselspannung gespeist werden - als auch hartmagnetisch, in letzterem Fall wird der Elektromagnet mit Gleichspannung gespeist und ferromagnetisch verstanden.

Exemplarisch wird die Erfindung im Folgenden anhand eines stromlos geschlossene Magnetventiles erläutert. Die Erfindung zeigt ihre Wirkung jedoch ebenso bei stromlos offenen Magnetventilen.

Elektromechanische Ventile haben eine Vorzugsströmungsrichtung, die im Rahmen dieser Anmeldung vereinfachend als Strömungsrichtung bezeichnet wird. Lediglich um die Darstellung der Erfindung zu vereinfachen, nehmen wir im Nachfolgenden an, dass die Strömungsrichtung parallel zur Ventilachse von einem Einlass auf der der Ventilhülse abgewandten Seite des ersten festen Ankers durch diesen zu einer Auslassöffnung auf der dem ersten festen Anker abgewandten Seite der Ventilhülse verläuft. Damit soll keine Beschränkung der Durchflussrichtung erfolgen, sondern nur in der nachfolgenden Beschreibung eine Bezugnahme ermöglicht werden.

Somit hat das Ventilgehäuse eine Einlassöffnung, eine Auslassöffnung und eine Ventilachse, wobei sich die Begriffe Einlassöffnung und Auslassöffnung, sowie einlassseitig und auslassseitig durch die oben definierte bevorzugte Strömungsrichtung eines Fluids durch das Ventil ergeben. Die Ventilachse entspricht hierbei der Längsachse des ersten Ventils. Unter einem Fluid ist eine Flüssigkeit zu verstehen. Zur Reduzierung des Strömungswiderstandes und zur Vermeidung von Ablagerungen sind die Einlassöffnung und die Auslassöffnung bevorzugt koaxial zur Längsachse.

Das Schaltventil hat wenigstens einen Bypasskanal welcher parallel zu der ersten Ventilsitzöffnung den ersten Abschnitt des Strömungspfads mit dem weiteren Abschnitt des Strömungspfads verbindet. Die Bezeichnung *"parallel"* bezieht sich hierbei auf die Anordnung des wenigstens einen Bypasskanals relativ zu der ersten Ventilsitzöffnung in einem Strömungsschaltbild, und beschränkt nicht die räumliche Anordnung des Bypasskanals. Der wenigstens eine Bypasskanal kann z.B die erste Einlassöffnung mit der ersten Auslassöffnung, an der Ventilsitzöffnung vorbei und in diesem Sinne parallel, miteinander kommunizierend verbinden. Der Bypasskanal bleibt daher vorzugsweise auch dann geöffnet, wenn der erste bewegliche Anker in seiner Geschlossenstellung ist.

Wie üblich meint, "wenigstens ein Bypasskanal", dass das Schaltventil zwei, drei , vier oder allgemeiner n Bypasskanäle aufweisen kann, wobei n jede natürliche Zahl größer 0 sein kann. Es gibt keine theoretische Grenze, aber in der Praxis sind kleine natürliche Zahlen bevorzugt, z.B. 1 ≤ *n* ≤ *nₘₐₓ,* wobei *nₘₐₓ* 6 {100, 75, 50, 25, 10, 5, 4, 3, 2, 1}..

Durch ein Verschieben des ersten beweglichen Ankers von der Offenstellung in die Geschlossenstellung wird daher nicht das Ventil vollständig geschlossen, sondern nur der Strömungswiderstand des ersten Ventils verringert. Das erste Ventil hat daher die Funktion einer schaltbaren Drossel. Durch das Verschließen der ersten Ventilöffnung findet an der Mündung des Bypasskanals ein Druckabfall statt. Dieser führt dazu, dass in der Flüssigkeit gelöste Gase zumindest zum Teil ausperlen, d.h. wenn der erste bewegliche Anker in der Geschlossenstellung ist, gibt das Ventil einen höheren Schaumanteil ab, als wenn der erste bewegliche Anker in der Offenstellung ist. Zu Beginn eines Zapfvorgangs kann man vorzugsweise den ersten beweglichen Anker in der Offenstellung vorhalten. Dann tritt bei korrekt eingestellter Druckdifferenz (oder Fördergeschwindigkeit) nahezu kein Schaum aus dem ersten Ventil und damit auch nicht aus einem nachgeschalteten Zapfhahnauslauf aus. Ist das Glas zumindest weitgehend gefüllt, kann der erste bewegliche Anker durch den ersten elektromagnetischen Antrieb in die Geschlossenstellung verschoben werden. Nun tritt zumindest im Wesentlichen Schaum aus dem Zapfhahnauslauf aus und es wird eine Schaumkrone auf die zuvor abgegebene Flüssigkeit aufgezapft. Das Getränk hat die vom Konsumenten erwartete Optik und auch den entsprechenden Geschmack, soweit dieser von der Schaumkrone beeinflusst wird. Dieser Vorgang ist vollständig durch eine Steuerung automatisierbar. Zudem ist das Verhältnis "Schaum/Nicht-Schaum" über einen sehr breiten Bereich einstellbar.

Der wenigstens eine Bypasskanal kann beispielsweise eine Durchgangsbohrung sein oder aufweisen. Die Durchgangsbohrung kann z.B. neben der Ventilsitzöffnung einen Ringsteg der Ventilhülse in axialer Richtung durchsetzen, d.h. die beiden Stirnseiten des Ringstegs miteinander verbinden.

Beispielsweise kann der wenigstens eine Bypasskanal von einem einlassseitig des ersten Ventilsitzes angeordneten Abschnitt des ersten Strömungspfads abzweigen und eine Bypassmündung haben, die in den weiteren Abschnitt des Strömungspfads einmündet.

Durch den wenigstens einen Bypasskanal ist in der Geschlossenstellung des ersten Ventils die Einlassöffnung mit der Auslassöffnung kommunizierend verbunden. Die Bypassmündung kann auslassseitig des ersten Strömungspfads in den auslassseitigen weiteren Abschnitt des ersten Strömungspfads münden und dadurch einen sich auslassseitig der Bypassmündung erstreckenden Abschnitts des ersten Strömungspfads definieren.

Vorzugsweise ist der Stömungswiderstand für Wasser durch den wenigstens einen Bypasskanal kleiner als der Strömungswiderstand durch den sich auslassseitig der Bypassmündung erstreckenden Abschnitts des ersten Strömungspfads sein. Der Strömungswiderstand des wenigstens einen Bypasskanals nimmt mit zunehmender Querschnittsfläche ab und mit zunehmender Länge zu. Bei einem Bypasskanal mit nicht konstanter Querschnittsfläche macht es Sinn diesen als Aneinanderreihung von Bypasskanalabschnitten konstanter Querschnittsflächen zu betrachten.

Der wenigstens eine Bypasskanal kann vorzugsweise eine kleinere minimale Querschnittsfläche (wobei die Querschnittsfläche hier quer (also orthogonal) zur Strömungsrichtung zu bestimmen ist) als der sich auslassseitig der Bypassmündung erstreckenden Abschnitts des ersten Strömungspfads haben. Bei einem sich auch geometrisch parallel zu der Längsachse erstreckenden Bypasskanalabschnitt wird die Querschnittsfläche durch eine Ebene definiert, die orthogonal zu der Längsachse steht. Vorzugsweise ist zumindest in einem Bypasskanalabschnitt die Längsachse des Bypasskanals parallel zur Ventilachse.

Bei einem Bypasskanalabschnitt mit einer kreisförmigen Querschnittsfläche ist die minimale Querschnittsfläche die Fläche an der der Bypasskanal den kleinsten Durchmesser hat. Diese ist vorzugsweise am einlassseitigen Ende des Bypasskanals. Durch die Änderung der Querschnittsfläche kann der Strömungswiderstand im Bypasskanal verringert werden und der Druck innerhalb des Bypasskanals abfallen. Der Querschnitt des wenigstens einen Bypasskanals kann abhängig von der Art des strömenden Fluids gewählt werden.

Der Bypasskanal kann vorzugsweise eine einstellbare Drossel aufweisen. Dadurch lässt sich der Druckabfall in dem Bypasskanal an die jeweilige Flüssigkeit, deren Viskosität und deren Druckniveau anpassen. Beispielsweise kann so beim Zapfen eines Bieres oder eines beliebigen anderen kohlensäurehaltigen Getränks die Menge an Schaum beim Einschenken in ein Gefäß reguliert werden. Beispielsweise kann in der Offenstellung des Ventils das Getränk, beispielsweise Bier, das erste Ventil ohne nennenswerte Schaumbildung durchfließen. Wird beim Zapfvorgang das Ventil in eine Geschlossenstellung gebracht fließt das Getränk, beispielsweise Bier, durch den wenigstens einen Bypasskanal. Durch die Veränderung der Querschnittsfläche des Bypasskanals kommt es zu einem Druckabfall und es entsteht Schaum. So kann die gewünschte Schaummenge beim Einschenken eingestellt werden.

Wie schon ersichtlich, ist das Schaltventil Teil einer elektromechanischen Ventilanordnung (kurz "Ventilanordnung", s.o). Diese Ventilanordnung beinhaltet zudem das schon genannte Steuerventil ("zweite Ventil"). Das Steuerventil kann den Fluidzufluss oder Abfluss einer Ventilanordnung Steuern, d.h. es kann den Fluidfluss freigeben oder sperren. Das Schaltventil hingegen dient zum Schalten (Verstellen) des Druckabfalls sofern das zweite Ventil offen ist, um somit zwischen der Abgabe von Schaum oder "Nicht-Schaum" umstellen zu können.

Das zweite Ventil hat eine Einlassöffnung und eine Auslassöffnung. Das erste Ventil ist mit dem zweiten Ventil zu einer Ventilanordnung verbunden. Mit verbunden ist hierbei keine mechanische Verbindung gemeint, sondern dass zwischen dem ersten Ventil und dem zweiten Ventil eine Fluidkommunikation besteht, die Ventile also fluidleitend verbunden sind. Vorzugsweise sind das erste Ventil und das zweite Ventil koaxial verbunden. Das erste Ventil und das zweite Ventil können hintereinander entlang der Strömungsrichtung in Reihe verbunden sein. Bevorzugt befindet sich das zweite Ventil, in Strömungsrichtung, vor dem ersten Ventil. Der erste Einlass (der Einlass des Schaltventils) ist mit einer zweiten Auslassöffnung (der Auslassöffnung des Steuerventils) verbunden . Natürlich können das erste Ventil und das zweite Ventil auch mechanisch aneinander befestigt sein. Beispielsweise kann das erste Ventil mit dem zweiten Ventil über ein Gewinde verbunden sein. Alternativ oder zusätzlich kann das erste Ventil und das zweite Ventil verpresst, geklemmt und/oder verklebt sein. Beispielsweise kann das erste Ventil am zweiten Ventil befestigt sein oder vice versa. Der erste feste Anker kann einlassseitig an einem auslassseitigen Bereich der zweiten Ventilhülse befestigt sein.

Das zweite Ventil weist ein zweites Ventilgehäuse auf. Das zweite Ventilgehäuse hat einen zweiten Ventilauslass. Zudem hat das zweite Ventil einen zweiten festen Anker und eine zweite Einlassöffnung. Die zweite Ventilhülse kann eine zweite Ventilachse definieren. Die zweite Ventilachse kann die Längsachse der zweiten Ventilhülse sein. Vorzugsweise haben das erste Ventil und das zweite Ventil eine gemeinsame Achse, d.h. die erste und zweite Ventilachse können identisch sein. Es ist jedoch auch möglich, dass die erste Ventilachse und die zweite Ventilachse zueinander in einem stumpfen oder spitzen Winkel angeordnet sind.

Das zweite Ventil hat einen zweiten Strömungspfad. Der zweite Strömungspfad verbindet die zweite Einlassöffnung mit der zweiten Auslassöffnung verbinden. Zudem hat das zweite Ventil einen zweiten Ventilsitz. Der zweite Ventilsitz kann zumindest einen Abschnitt des zweiten Strömungspfads radial begrenzen. Der zweite Ventilsitz kann eine zweite Ventilsitzöffnung umschließen. Der zweite Strömungspfad kann durch die zweite Ventilsitzöffnung verlaufen.

Das zweite Ventil hat einen zweiten beweglicher Anker. Der zweite bewegliche Anker kann entlang der zweiten Ventilachse in dem zweiten Ventilgehäuse zwischen einer zweiten Geschlossenstellung und einer zweiten Offenstellung verschiebbar gelagert sein. Alternativ oder zusätzlich kann der zweite bewegliche Anker in Bezug auf die zweite Ventilachse einen Winkel von 30° - 90°, insbesondere 60° bis 90° aufweisen. Ein Winkel von 90° ist besonders bevorzugt, wobei Abweichungen von ±15° oder ±10°, oder ±5° oder ±2.5° oder ±1° zulässig sind und kleinere Abweichungen bevorzugt sind. Der zweite bewegliche Anker kann in der ersten Geschlossenstellung die zweite Ventilsitzöffnung verschließen und in der ersten Offenstellung den zweiten Strömungspfad durch die zweite Ventilsitzöffnung freigeben. Ein zweiter elektromechanischer Antrieb wirkt auf den zweiten beweglichen Anker, um diesen zwischen der zweiten Offenstellung und der zweiten Geschlossenstellung zu verschieben. Der zweite elektromechanische Antrieb kann entsprechend dem ersten elektromechanischen Antrieb ausgebildet sein. Bei geschlossener zweiter Ventilsitzöffnung besteht keine Fluidverbindung zwischen der zweiten Einlassöffnung und der zweiten Auslassöffnung. Die Ventilhülse des elektromechanischen Schaltventils (erstes Ventil) hat einen ersten Hülsenkörper, der der Ventilhülse entspricht. Die Ventilhülse kann eine Hülsenachse haben. Der Hülsenkörper weist einen sich nach innen erstreckenden Ringsteg auf. Der Ringsteg unterteilt die Ventilhülse in einen ersten Hülsenabschnitt und in einen weiteren Hülsenabschnitt. Der Ringsteg bildet den Ventilsitz aus. Der Ventilsitz kann eine erste Ventilsitzöffnung umranden, umfassen und/oder begrenzen. Zudem kann die Ventilsitzöffnung den ersten Hülsenabschnitt und den weiteren Hülsenabschnitt kommunizierend miteinander verbinden, d.h. eine Fluidverbindung zwischen den beiden Hülsenabschnitten ausbilden. Die Ventilhülse kann den Bypasskanal aufweisen. Der wenigstens eine Bypasskanal verbindet parallel zu der Ventilsitzöffnung den ersten Hülsenabschnitt und den weiteren Hülsenabschnitt miteinander, sodass bei geschlossener Ventilsitzöffnung der erste Hülsenabschnitt und der weiteren Hülsenabschnitt miteinander verbunden sind.

Der wenigstens eine Bypasskanal kann vom ersten Hülsenabschnitt abzweigen und eine Bypassmündung haben, die in dem weiteren Hülsenabschnitt mündet. Der Stömungswiderstand für Wasser durch den Bypasskanal kann kleiner sein als der Strömungswiderstand durch den sich auslassseitig der Bypassmündung erstreckenden weiteren Hülsenabschnitt. Zudem kann der Bypasskanal eine kleinere minimale Querschnittsfläche haben als der sich auslassseitig der Bypassmündung erstreckende weitere Hülsenabschnitt. Bevorzugt wird die Querschnittsfläche an der Bypassmündung unstetig vergrößert. Dies hat zur Folge, dass der Strömungswiderstand und der Druck schlagartig (zumindest nahezu unstetig) abfallen. Dies ruft den bereits zum ersten Ventil beschriebenen Effekt hervor.

Der erste und/oder der zweite feste Anker kann (je) zwei Stirnflächen und einen die Stirnflächen entlang der ersten und/oder zweiten Ventilachse verbindenden ersten und/oder zweiten Durchgangskanal haben. Die dem ersten und/oder der zweiten beweglichen Anker abgewandte Öffnung des ersten und/oder zweiten Durchgangskanals kann im Beispiel des stromlos geschlossenen Magnetventils die Einlassöffnung des Ventilgehäuses bilden. Die dem ersten und/oder der zweiten beweglichen Anker zugewandte Öffnung des entsprechenden Durchgangskanals kann die auslassseitige Öffnung des Durchgangskanals bilden. Der Durchgangskanal kann in radialer Richtung von einer Kanalwandung begrenzt werden und kann bei geöffnetem Ventil durchströmt werden. Zudem kann der erste und/oder der zweite feste Anker eine erste und/oder zweite Mantelfläche aufweisen, die die beiden Stirnflächen verbindet. Die erste und/oder zweite Mantelfläche ist vorzugsweise zumindest in einem Abschnitt kreiszylindrisch.

Die erste und/oder der zweite Ventilhülse kann eine erste und/oder zweite Innenwandung, eine erste und/oder zweite Außenwandung und eine erste und/oder zweite Durchlassöffnung an ihrer dem ersten bzw. zweiten festen Anker abgewandten Stirnseite aufweisen. Bei der hier angenommenen Vorzugsströmungsrichtung wäre die Durchlassöffnung die Auslassöffnung. Bei einem stromlos geschlossenen Ventil kann Durchlassöffnung zugleich die Ventilsitzöffnung sein. Die erste und/oder zweite Durchlassöffnung ist vorzugsweise koaxial zur ersten bzw. zweiten Ventilachse. Der erste und/oder zweite Ventilsitz und die erste und/oder zweite Ventilhülse können (jeweils) einstückig sein. Bei großen Stückzahlen bietet es sich alternativ an die Ventilhülse aus einem (z.B. nahtlos gezogenen) Rohr zu fertigen und den Ventilsitz daran zu befestigen, z.B. durch Einpressen, Verschrauben, Verschweißen, Einbördeln oder dgl.

Der erste und/oder der zweite feste Anker kann einlassseitig in die erste bzw. zweite Ventilhülse eingreifen. Darunter ist zu verstehen, dass ein ventilhülsenseitiger Bereich des ersten und/oder der zweiten festen Ankers in einen ankerseitigen (bezogen auf den ersten und/oder der zweiten festen Anker) Bereich der entsprechenden Ventilhülse eingreift. Bevorzugt kann die erste und/oder der zweite Ventilhülse (jeweils) ein erstes Gewinde und der erste und/oder der zweite feste Anker (jeweils) ein komplementäres zweites Gewinde aufweisen. Im montierten Zustand greifen dann die einander entsprechenden ersten Gewinde und zweiten Gewinde ineinander ein. Beispielsweise kann die erste und/oder der zweite Ventilhülse ein Innengewinde und der erste und/oder der zweite feste Anker (je) ein Außengewinde haben. Es ist ebenso auch möglich, dass der erste und/oder der zweite feste Anker ein Innengewinde und die erste und/oder der zweite Ventilhülse ein Außengewinde aufweist (dann greift die Ventilhülse in den Anker ein). Eine Verbindung durch Verkleben, Verschweißen oder Klemmen ist alternativ oder zusätzlich möglich.

Durch eine koaxiale Orientierung der ersten und/oder der zweiten Ventilhülse zu dem ersten und/oder der zweiten festen Anker kann das erste und/oder zweite Ventil aus einfachen, auch in kleinen Stückzahlen günstig herstellbaren Drehteilen zusammengesetzt werden. Zudem weist das erste und/oder der zweite Ventil durch die koaxiale Orientierung einen geringen Strömungswiderstand auf und Ablagerungen in dem Ventil werden reduziert.

Der erste und/oder der zweite bewegliche Anker hat vorzugsweise (jeweils) zumindest eine erste und/oder zweite Mantelfläche, eine dem ersten und/oder der zweiten Ventilsitz abgewandte Stirnfläche, eine dem ersten und/oder der zweiten Ventilsitz zugewandte Seite und eine Innenwandung. Die erste und/oder zweite Mantelfläche des ersten und/oder der zweiten beweglichen Ankers wird nachfolgend nur zur sprachlichen Abgrenzung gegenüber der Mantelfläche des erste und/oder der zweite festen Ankers als erste und/oder zweite "Außenfläche" bezeichnet. In dem Beispiel eines stromlos geschlossenen Magnetventils, wäre die dem erste und/oder zweite Ventilsitz abgewandte erste und/oder zweite Stirnfläche die einlassseitige erste und/oder zweite Stirnfläche, wobei sich einlassseitig auf den jeweiligen Fluideinlass des ersten bzw. zweiten Ventilgehäuses bezieht. Die dem ersten bzw. zweiten Ventilsitz zugewandte erste bzw. zweite Stirnfläche wäre entsprechend die auslassseitige erste bzw. zweite Stirnfläche des ersten bzw. der zweiten festen Ankers. Entsprechend werden die Stirnflächen des ersten und/oder der zweiten festen Ankers und andere Elemente des Ventils mit Bezug auf die Einlass- bzw. Auslassöffnung des entsprechenden Ventilgehäuses benannt. Beinhaltert der elektromechanische Antrieb ein elastisches Vorspannelement, kann dieses Vorspannelement eine Feder, beispielsweise eine Schraubenfeder, sein. Wie schon beschrieben kann der elektromechanischen Antrieb einen Aktuator aufweisen.

Bevorzugt hat das erste und/oder der zweite Ventil einen ersten bzw. zweiten Spulensitz. Der jeweilige Spulensitz kann z.B. von zumindest einem Segment der entsprechenden Außenwandung der ersten bzw. der zweiten Ventilhülse und zumindest einem Segment der Mantelfläche des ersten bzw. des zweiten festen Ankers gebildet werden. Auf diesen Spulensitz kann ein erster bzw. zweiter Magnet, beispielsweise ein Elektromagnet, aufgesetzt werden. Wird der Elektromagnet erregt, so wird bei einem stromlos geschlossenen ersten bzw. zweiten Magnetventil der erste bzw. der zweite bewegliche Anker in Richtung des ersten bzw. zweiten festen Ankers gegen eine Kraft, beispielsweise eines Vorspannelements parallel zur Ventilachse verschoben, wodurch der ansonsten verschlossene Auslass des Ventilsitzes freigegeben wird. Das Ventil kann nun koaxial von dem zu steuernden Fluid durchströmt werden

An dem ersten und/oder der zweiten beweglichen Anker ist vorzugsweise eine erste bzw. zweite Ventilsitzdichtung befestigt, die in der Geschlossenstellung an dem ersten bzw. zweiten Ventilsitz anliegt und dadurch die entsprechende Ventilsitzöffnung verschließt. In der Offenstellung wird zwischen der ersten bzw. zweiten Ventilsitzdichtung und dem entsprechenden Ventilsitz ein Spalt ausgebildet, durch den das Fluid in oder aus der entsprechenden Ventilsitzöffnung hinein bzw. aus ihr heraus fließen kann. Wenigstens eine der Ventilsitzdichtungen kann beispielsweise die Form eines Kreiszylinders haben, wobei die Deckfläche des Zylinders am ersten Anker anliegt und die Grundfläche in der Geschlossenstellung am Ventilsitz anliegt. Vorzugsweise ist der Radius dieses Zylinders geringer als dessen Höhe. Natürlich kann die Ventilsitzdichtung auch andere Formen haben, beispielsweise kann die Ventilsitzdichtung ein elliptischer Zylinder sein oder jede andere Form haben, sofern eine Abdichtung der Ventilsitzöffnung gewährleistet ist.

Vorzugsweise bilden die Außenfläche des ersten und/oder der zweiten beweglichen Ankers und die erste und/oder zweite Innenwandung der ersten bzw.der zweiten Ventilhülse ein Gleitlager aus. Das optionale erste und/oder zweite Gleitlager schränkt den Freiheitsgrad des ersten bzw. des zweiten beweglichen Ankers orthogonal zur ersten bzw. zweiten Ventilachse ein, wodurch der erste und/oder der zweite bewegliche Anker besonders zuverlässig in der ersten bzw. zweiten Ventilhülse geführt werden kann. Dadurch wird eine zuverlässiges Öffnen und Schließen des Ventils gewährleistet. Die Außenfläche kann auf einem dem ersten und/oder der zweiten Ventilsitzes zugewandten Abschnitt verjüngt sein, d.h. eine kleinere Querschnittsfläche umschließen. Dadurch ergibt sich zwischen der Innenwandung, der ersten und/oder der zweiten Ventilhülse und der verjüngten Außenfläche des ersten und/oder der zweiten beweglichen Ankers ein Freiraum. In der verjüngten Außenfläche kann wenigstens eine Fluidleitung münden.

Beispielsweise kann der erste und/oder der zweite bewegliche Anker auf seiner dem ersten und/oder der zweiten Ventilsitz zugewandten Seite einen geringeren Durchmesser als im sich daran anschließenden Bereich des ersten und/oder der zweiten beweglichen Ankers haben.

Der erste und/oder der zweite bewegliche Anker kann in einer dem ersten und/oder dem zweiten Ventilsitz abgewandten Stirnfläche ein sich parallel zu der Ventilachse erstreckendes Sackloch haben. In diesem Fall ist mit *"parallel"* die räumliche Anordnung des Sacklochs gemeint. Das Sackloch kann eine von der einlassseitigen Stirnfläche des ersten und/oder der zweiten beweglichen Ankers ausgehende und zu dessen Längsachse koaxiale Sackbohrung sein. Bevorzugt ist das Sackloch zylindrisch. Natürlich kann das Sackloch aber auch gefräst sein und muss nicht zylindrisch sein. Wie üblich ist unter einem Sackloch eine zu der Ventilachse koaxiale Ausnehmung zu verstehen, die das Werkstück nicht vollständig durchdringt wie eine Durchgangsbohrung und folglich also eine bestimmte Tiefe hat. Alternativ kann das Sackloch auch als eine Durchgangsbohrung ausgebildet sein, die Ventilsitzseitig durch die Ventilsitzdichtung verschlossen ist. Im Folgenden schließt der Begriff "Sackloch" diese Möglichkeit mit ein.

Das Sackloch ist über die wenigstens eine Fluidleitung mit einem Freiraum auf der dem ersten und/oder zweiten Ventilsitz zugewandten Seite des ersten und/oder der zweiten beweglichen Ankers kommunizierend verbunden. Von dem Sackloch können auch zwei oder mehr Fluidleitungen abzweigen, die das Sackloch mit dem Freiraum kommunizierend verbinden. Anders formuliert, kann der Freiraum, auf der dem ersten und/oder dem zweiten Ventilsitz zugewandten Seite des ersten beweglichen Ankers beispielsweise durch eine verjüngte Außenfläche des ersten und/oder des zweiten beweglichen Ankers im Bereich des ersten und/oder zweiten Ventilsitzes gebildet werden und die Fluidleitungen können ausgehend vom Sackloch in Ausnehmungen in der verjüngte Außenfläche des ersten und/oder zweiten beweglichen Ankers münden. Die wenigstens eine Fluidleitung kann in wenigstens einer (z.B. ringnutförmigen) Ausnehmung auf der verjüngten Außenfläche münden. Wenn mehrere Fluidleitungen vorgesehen sind, münden diese bevorzugt in der gleichen Ringnut. Besonders bevorzugt beträgt der Winkel zwischen den Achsen der Ausnehmungen und der Achse der Sackbohrung zwischen 90° und 165°, insbesondere zwischen 105° und 155°. Die Fluidleitung kann in Bezug auf die erste und/oder zweite Ventilachse in Richtung der Auslassöffnung einen Winkel von 30° - 90°, insbesondere 30° bis 45° aufweisen. Ein Winkel von 30° ist besonders bevorzugt, wobei Abweichungen von ±15° oder ±10°, oder ±5° oder ±2.5° oder ±1° zulässig sind und kleinere Abweichungen bevorzugt sind.

Der wenigstens eine Bypasskanal kann den Freiraum auf der dem ersten Ventilsitz zugewandten Seite des ersten beweglichen Ankers mit der Auslassöffnung kommunizierend verbinden.

Die einander gegenüberliegenden Stirnfläche des ersten und/oder zweiten festen Ankers und des ersten und/oder zweiten beweglichen Ankers begrenzen vorzugsweise einen von der Innenwandung der ersten und/oder zweiten Ventilhülse umschlossenen Hohlraum in axialer Richtung. Der Hohlraum kann zumindest näherungsweise zylindrisch sein, bevorzugt zumindest näherungsweise kreiszylindrisch. Bei einem stromlos geschlossenen Magnetventil verbindet der Hohlraum die auslassseitige Öffnung des Durchgangskanals mit der einlassseitigen Öffnung des Sacklochs kommunizierend, wodurch ein Fluid vom Einlass durch den Durchgangskanal über den Hohlraum in das Sackloch strömen kann. Vom Sackloch gelangt das Fluid über die wenigstens eine Verbindungsleitung, beispielsweise eine Fluidleitung, in den auslassseitig des ersten beweglichen Ankers gebildeten Freiraum.

Vorzugsweise greift der erste und/oder zweite feste Anker mit seiner dem zweiten Anker zugewandten Stirnfläche in die Ventilhülse ein.

Ein Abschnitt des ersten und/oder zweiten festen Ankers kann in einen ihm zugewandten Abschnitt der Ventilhülse eingreifen. Der in die Ventilhülse eingreifende Abschnitt des festen Ankers kann vorzugsweise verjüngt sein. Dadurch kann der an den in die Ventilhülse eingreifenden Abschnitt des ersten und/oder zweiten festen Ankers angrenzende Abschnitt des ersten und/oder zweiten festen Ankers einen axialen Anschlag ausbildet. Der Anschlag kann an einer ankerseitigen Stirnfläche der ersten und/oder zweiten Ventilhülse (bezogen auf den festen Anker) anliegen.

Der erste und/oder zweite feste Anker kann einen einlassseitigen (dem beweglichen Anker abgewandten) Abschnitt, mit einem ersten Durchmesser, einen mittleren Abschnitt mit einem zweiten Durchmesser und einen ventilhülsenseitigen Abschnitt mit einem dritten Durchmesser aufweisen. Der Durchmesser des ersten und/oder zweiten festen Ankers entspricht hierbei dem Abstand zwischen den Schnittpunkten einer orthogonal durch die Ventilachse verlaufenden Geraden mit der Mantelfläche des ersten und/oder zweiten festen Ankers. Der Durchmesser des mittleren Abschnitts kann größer sein als der Durchmesser des ventilhülsenseitigen Abschnitts des ersten und/oder zweiten festen Ankers. Der Durchmesser des einlassseitigen Abschnitts des ersten und/oder zweiten festen Ankers kann kleiner oder gleich dem Durchmesser des mittleren Abschnitts sein. Vorzugsweise kann der Durchmesser des hülsenseitigen und einlassseitigen Abschnitts in etwa gleich groß sein. Am Übergang des mittleren Abschnitts zum ventilhülsenseitigen Abschnitt des ersten und/oder zweiten festen Ankers kann sich durch die unterschiedlichen Durchmesser eine sich in radialer Richtung erstreckende Schulter ausbilden. Die Schulter kann zur Begrenzung der axialen Bewegung des ersten und/oder zweiten festen Ankers entlang der Ventilachse dienen. Die Schulter kann beispielsweise eine umlaufende Schulter sein und einen Axialanschlag, z.B. für die ankerseitige Stirnfläche der ersten und/oder zweiten Ventilhülse ausbilden.

Die ersten und/oder zweiten Ventilhülse kann eine zur Schulter komplementäre Anschlagsfläche haben. Die komplementäre Anschlagsfläche kann eine ankerseitige Stirnfläche der ersten und/oder zweiten Ventilhülse sein. Die ankerseitige Stirnfläche der ersten und/oder zweiten Ventilhülse kann einer einlassseitigen Stirnfläche der ersten und/oder zweiten Ventilhülse entsprechen. Die ankerseitige Stirnfläche der ersten und/oder zweiten Ventilhülse kann beispielsweise ein Anschlag sein. Die ankerseitige Stirnfläche der ersten und/oder zweiten Ventilhülse kann einer dem Ventilsitz abgewandten Stirnfläche der ersten und/oder zweiten Ventilhülse entsprechen. Wie üblich wird unter einem Anschlag ein Widerlager verstanden, dass eine Bewegung begrenzt. Durch den Anschlag wird hier der Endpunkt der axialen Bewegung der ersten und/oder zweiten Ventilhülse relativ zum ersten und/oder zweiten festen Anker beim Einschieben des ventilhülsenseitigen Abschnitts des ersten und/oder zweiten festen Ankers in die erste und/oder zweite Ventilhülse festgelegt. Die auslassseitige Fläche der Schulter kann an der ankerseitigen Stirnfläche der ersten und/oder zweiten Ventilhülse anschlagen. Die auslassseitige Stirnfläche der Schulter kann zusammen mit der ankerseitigen Stirnfläche der ersten und/oder zweiten Ventilhülse die Hälfte eines Formschlusses bilden, d. h. der erste und/oder zweite feste Anker, der anschlagende Körper, kann die erste und/oder zweite Ventilhülse, den Anschlag, in Gegenrichtung wieder verlassen. Natürlich kann auch die erste und/oder zweite Ventilhülse als anschlagender Körper und der erste und/oder zweite feste Anker als Anschlag definiert werden.

Das Sackloch des ersten und/oder zweiten Ventils kann beispielsweise eine axial gestufte Bohrung sein. Das Sackloch kann einen ersten einlassseitigen Abschnitt mit einem ersten Durchmesser und einen sich auslassseitig daran anschließenden zweiten Abschnitt haben, der einen zweiten Durchmesser hat. Der erste Abschnitt und der zweite Abschnitt können unterschiedliche Durchmesser haben. Bevorzugt ist der erste Durchmesser größer als der zweite Durchmesser. Dadurch wird am Übergang vom größeren ersten Durchmesser zu dem kleineren zweiten Durchmesser eine Widerlagerfläche ausgebildet. Ist der elektromechanische Antrieb beispielsweise ein elastisches Vorspannelement, wie eine Feder, stütz sich das elastische Vorspannelements auslassseitig an der Widerlagerfläche ab. Einlassseitig kann das Vorspannelement vorzugsweise an der auslassseitigen Stirnfläche des ersten und/oder zweiten festen Ankers anliegen, so dass das Vorspannelement den ersten und/oder zweiten beweglichen Anker in Richtung des Ventilauslasses vorspannt. Alternativ oder zusätzlich kann der elektromechanische Antrieb ein Aktuator sein. Der Aktuator kann am ersten und/oder zweiten beweglichen Anker angeordnet sein. Der Aktuator kann an der Außenfläche des ersten und/oder zweiten beweglichen Ankers, im ersten Abschnitt oder im zweiten Abschnitt des ersten und/oder zweiten beweglichen Ankers angeordnet sein. Der Aktuator kann zudem innerhalb des ersten und/oder zweiten beweglichen Ankers, im ersten Abschnitt oder im zweiten Abschnitt des ersten und/oder zweiten beweglichen Ankers und an der Innenwandung des ersten und/oder zweiten beweglichen Ankers angeordnet sein.

Beinhaltet der elektromechanische Antrieb, beispielsweise ein elastische Vorspannelement, sitzt das elastische Vorspannelement vorzugsweise zwischen dem ersten und/oder zweiten festen Anker und dem ersten und/oder zweiten beweglichen Anker. Der elektromechanische Antrieb kann auf der dem ersten und/oder zweiten beweglichen Anker abgewandten Seite zumindest mittelbar an dem ersten und/oder zweiten Ventilgehäuse anliegen, d.h. beispielsweise eine axiale Verschiebung eines Vorspannelementes in Richtung des ersten und/oder zweiten beweglichen festen Ankers kann durch diesen blockiert oder ein anderes mit dem Ventilgehäuse verbundenes Widerlager unterbunden werden. Die dem ersten und/oder zweiten festen Anker abgewandte Seite des Vorspannelements und/oder des Aktuators liegt vorzugsweise an der dem ersten und/oder zweiten festen Anker zugewandten Stirnfläche des ersten und/oder zweiten beweglichen Ankers an. Dadurch übt das Vorspannelement und/oder der Aktuator eine von dem ersten und/oder zweiten festen Anker axial wegweisende Kraft auf den ersten und/oder zweiten beweglichen Anker aus.

Das erste und/oder zweite Ventil kann zudem ein einlassseitiges an den ersten und/oder zweiten festen Anker befestigtes Fitting haben. Das Fitting kann mit dem ersten und/oder zweiten festen Anker durch Kraftschluss, Formschluss oder Stoffschluss verbunden werden. Das Fitting kann mit dem ersten und/oder zweiten festen Anker beispielsweise durch Verschrauben, Löten und Schweißen verbunden werden. Natürlich können das Fitting und der ersten und/oder zweiten festen Anker auch einstückig ausgebildet sein. Das Fitting kann einen Flansch, einen Durchlass, eine ankerseitige Stirnfläche und eine dem ersten und/oder zweiten festen Anker abgewandte Stirnfläche haben. Das Fitting kann eine ankerseitige Stirnfläche mit einem Durchlass haben. Der Durchlass kann koaxial zur ersten und/oder zweiten Ventilachse sein.

Das Fluid kann durch den Durchlass des Fittings, auch Fittingkanal genannt, in den Einlass des ersten und/oder zweiten Ventilgehäuses strömen. Der Fittingkanal hat eine den Kanal in radialer Richtung begrenzende Fittingkanalwandung. Der Fittingkanal kann in der ankerseitigen Stirnfläche des Fittings münden. Der Fittingkanal kann koaxial zur ersten und/oder zweiten Ventilachse sein. Vorzugsweise kann der Fittingkanal koaxial zum Durchgangskanal sein. Vorzugsweise ist das Fitting mit dem zweiten Ventil verbunden.

Ein Magnet, beispielsweise ein Elektromagnet, kann auf dem Spulensitz des ersten und/oder zweiten Ventils angeordnet sein.

Der Magnet kann zusammen mit Polblechen auf das erste und/oder zweite Ventilgehäuse und den ersten und/oder zweiten festen Anker koaxial aufschiebbar sein. Dies kann eine einfache Montage des Magneten ermöglichen. Zudem kann der Magnet, wenn das Ventil von einem kalten Fluid durchströmt wird, gekühlt werden. Das erste Ventil und/oder das zweite Ventil können einen Anschluss aufweisen. Der Anschluss kann die Magnete mit Energie versorgen.

Der Magnet kann auf dem ersten und/oder zweiten Ventilgehäuse gegen unbeabsichtigtes axiales Verschieben gesichert sein. Die erste und/oder zweite Ventilhülse kann auslassseitig einen Flansch haben, an dem sich der Magnet abstützt. Einlassseitig kann der Magnet entweder durch eine Mutter oder einen weiteren Flansch fixiert sein. Bevorzugt hat das erste und/oder zweite Ventilgehäuse einen Flansch mit Schlüsselflächen und der erste und/oder zweite feste Anker ein Außengewinde, auf das das Fitting aufschraubbar ist. So lässt sich zum Abschluss der Montage des Ventils der Magnet auf das erste und/oder zweite Ventilgehäuse bis zum Anschlag am Flansch des erste und/oder zweite Ventilgehäuses aufschieben und mit dem Fitting gegen Verrutschen sichern.

Vorzugsweise können die erste und/oder zweite Ventilhülse und der erste und/oder zweite feste Anker jeweils auf der dem Elektromagneten abgewandten Seite ein Innen- und/oder ein Außengewinde, auf das handelsübliche Anschlussstücke aufgeschraubt werden können, haben. Ist die Mantelfläche des ersten und/oder zweiten festen Ankers und/oder die Außenwandung des ersten und/oder zweiten Ventilgehäuses an seinem dem Magneten abgewandtem Ende jeweils verjüngt, so kann dort ein Dichtring aufgeschoben werden, der von dem Gewinde eines Anschlussstückes, beispielsweise dem zuvor genannten Fitting übergriffen wird.

Das erste Ventil und/oder das zweite Ventil können eine erste und/oder zweite Ventilumfassung haben. Die entsprechende Ventilumfassung kann das erste und/oder zweite Ventil zumindest teilweise einschließen bzw. umgeben.

Die erste und/oder zweite Ventilhülse, die ersten und/oder zweiten festen Anker, die ersten und/oder zweiten beweglichen Anker und das Fitting können sämtlich als Drehteile herstellbar sein, d.h. die Ventilgehäuse müssen nicht mehr gegossen oder geschmiedet werden. Das vereinfacht die Fertigung und erhöht die Flexibilität gegenüber Kundenwünschen.

Das erste und/oder zweite Ventil kann sowohl ein Gleichstrom (DC) - als auch ein Wechselstrom (AC)-Ventil sein.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine Seitenansicht einer Ausführungsform einer Ventilanordnung
Figur 2 zeigt eine Unteransicht einer Ausführungsform einer Ventilanordnung
Figur 3 zeigt eine Draufsicht einer Ausführungsform einer Ventilanordnung
Figur 4 zeigt eine Rückansicht einer Ausführungsform des ersten Ventils.
Figur 5 zeigt eine Ausführungsform einer geschnittenen Ventilanordnung
Figur 6 zeigt eine Ausführungsform einer Ventilhülse
Figur 7 zeigt eine Ausführungsform einer geschnittenen Ventilhülse

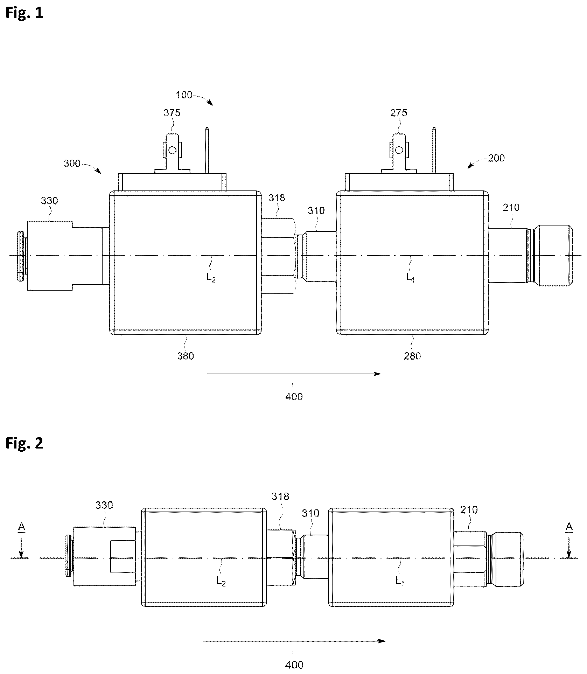

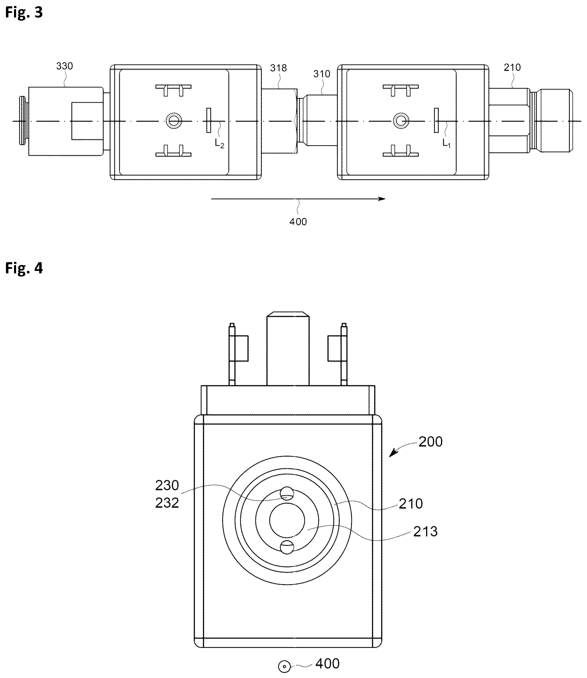

Figur 1, Figur 2 und Figur 3 zeigen unterschiedliche Ansichten einer Ausführungsform einer Ventilanordnung 100. Figur 1 zeigt eine Seitenansicht, Figur 2 eine Unteransicht und Figur 3 eine Draufsicht der Ventilanordnung 100. Die Ventilanordnung 100 kann ein erstes Ventil 200 und ein zweites Ventil 300 aufweisen.

Das erste Ventil ist in einer Ventilanordnung mit einem Steuerventil in Reihe geschaltet. Das Steuerventil wird hierin auch als *"zweites Ventil"* bezeichnet. Das erste Ventil 200 ist mit dem zweiten Ventil 300 zu einer Ventilanordnung 100 verbunden. Mit verbunden ist hierbei keine mechanische Verbindung gemeint, sondern dass zwischen dem ersten Ventil 200 und dem zweiten Ventil 300 eine Fluidkommunikation besteht, die Ventile also fluidleitend verbunden sind. Vorzugsweise sind das erste Ventil 200 und das zweite Ventil 300 koaxial verbunden. Natürlich können das erste Ventil 200 und das zweite Ventil 300 auch mechanisch verbunden sein. Beispielsweise kann das erste Ventil 200 mit dem zweiten Ventil 300 über ein Gewinde verbunden sein. Alternativ oder zusätzlich kann das erste Ventil 200 und das zweite Ventil 300 verpresst sein und/oder verklebt sein. Beispielsweise kann das erste Ventil 200 am zweiten Ventil 300 befestigt sein oder vice versa. Das erste Ventil 200 und das zweite Ventil 300 können hintereinander entlang der Strömungsrichtung 400 in Reihe verbunden sein. Bevorzugt befindet sich das zweite Ventil 300, in Strömungsrichtung 400, vor dem ersten Ventil 200. Die Ventilhülse 310 des zweiten Ventils 300 kann mit dem ersten Ventil 200 verbunden sein. Ein Flansch 318 kann als Montagehilfe dienen. Das erste Ventil 200 und das zweite Ventil können eine erste und/oder zweite Ventilumfassung 280, 380 haben. Die entsprechende Ventilumfassung 280, 380 kann das erste und/oder zweite Ventil 200, 300 zumindest teilweise einschließen bzw. umgeben. Ein Fitting 330 kann einlassseitig auf das erste Ventil 300 aufgesetzt sein. Das Fitting 300 kann der Anschluss der Ventilanordnung 100 sein. Das erste Ventil 200 und das zweite Ventil 300 können Ventilachsen L₁,L₂ haben. Die Ventilachsen können eine gemeinsame Achse der Ventilanordnung ausbilden. Das Fitting 310, die zweite Ventilhülse 310 und die erste Ventilhülse 210 können in Strömungsrichtung entlang der gemeinsamen Ventilachse L₁,L₂ angeordnet sein. Das erste Ventil 200 und das zweite Ventil 300 können jeweils einen Anschluss 275, 375 aufweisen. Über diese Anschlüsse 275,375 können Elektromagnete innerhalb der Ventilgehäuse 275, 375 mit Energie versorgt werden.

Figur 4 zeigt eine Rückansicht des ersten Ventils 100 mit Blickrichtung in die erste Ventilhülse 210 entgegen der Strömungsrichtung 400. Die Ventilhülse 210 kann eine Auslassöffnung 213 haben. Wenigstens ein Bypasskanal 230 kann mit einer Bypassmündung 232 in der Auslassöffnung 213 münden.

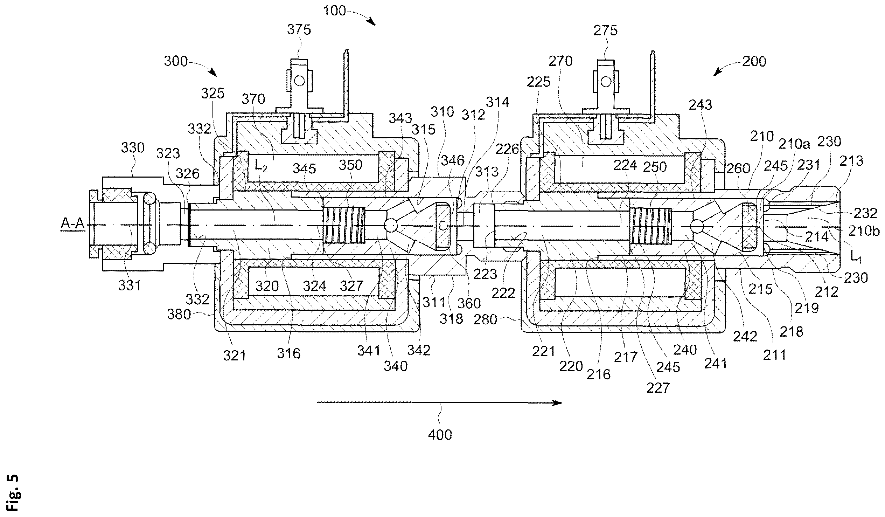

Figur 5 zeigt einer geschnittenen exemplarischen Ventilanordnung 100 nach Figur 1. Die Ventilanordnung 100 hat ein erstes Ventil 200 und ein zweites Ventil 300. Das erste Ventil 200 hat ein erstes Ventilgehäuse mit einer ersten Ventilhülse 210, einem ersten festen Anker 220, einer ersten Einlassöffnung 223 und einer ersten Auslassöffnung 213 haben. Die erste Ventilhülse 210 definiert eine erste Ventilachse L₁. Die erste Ventilachse L₁ kann der Längsachse der Ventilhülse 210 entsprechen. Die erste Ventilhülse 210 hat einen ersten Ventilsitz 212, der eine erste Ventilsitzöffnung 214 umgibt und einen ersten Strömungspfad in einen ersten Abschnitt 210a und einen weiteren Abschnitt 210b teilt. Das erste Ventil 200 hat einen ersten beweglichen Anker 240 haben. Der erste bewegliche Anker 240 ist entlang der ersten Ventilachse L₁ in dem ersten Ventilgehäuse zwischen einer ersten Geschlossenstellung und einer ersten Offenstellung verschiebbar gelagert. Alternativ oder zusätzlich kann der erste bewegliche Anker 240 in Bezug auf die erste Ventilachse L₁ einen Winkel von 30° - 90°, insbesondere 60° bis 90° aufweisen. Ein Winkel von 90° ist besonders bevorzugt, wobei Abweichungen von ±15° oder ±10°, oder ±5° oder ±2.5° oder ±1° zulässig sind und kleinere Abweichungen bevorzugt sind. In der ersten Geschlossenstellung verschließt der erste bewegliche Anker 240 die erste Ventilsitzöffnung 214 und in der ersten Offenstellung wird der erste Strömungspfad durch die erste VentilsitzÖffnung 214 freigegeben. Ein erster elektromechanischer Antrieb 250 ist in einer Wirkverbindung mit dem ersten beweglichen Anker 240. Der elektromechanische Antrieb kann folglich den ersten beweglichen Anker 240 zwischen der ersten Offenstellung und der ersten Geschlossenstellung verschieben. Beispielsweise kann sich der erste bewegliche Anker über ein elastisches Vorspannelement zumindest mittelbar am ersten festen Anker abstützen.

Figur 5 zeigt exemplarisch ein stromlos geschlossenes Magnetventil. In Fig.5 ist der erste Ventilsitz 212 auf der dem ersten beweglichen Anker 240 abgewandten Seite des Ventilgehäuses angeordnet. In Figur 5 befindet sich das Ventil in einer Offenstellung.

Elektromechanische Ventile haben eine Vorzugsströmungsrichtung 400, die im Rahmen dieser Anmeldung vereinfachend als Strömungsrichtung bezeichnet wird. Die Strömungsrichtung kann parallel zur Ventilachse von einem Einlass 223 auf der der Ventilhülse 210 abgewandten Seite des ersten festen Ankers 220 durch diesen zu einer Auslassöffnung 213 auf der dem ersten festen Anker 220 abgewandten Seite der Ventilhülse 210 verlaufen.

Das erste Ventil 200 hat wenigstens einen Bypasskanal 230 . Der Bypasskanal 230 verbindet parallel zu der ersten Ventilsitzöffnung 214 einen ersten Abschnitt 210a des ersten Strömungspfads und einen weiteren Abschnitt 210b des Strömungspfads. Die Bezeichnung *"parallel"* bezieht sich hierbei auf die Anordnung der des wenigstens einen Bypasskanals 230 relativ zu der ersten VentilsitzÖffnung 214 in einem Strömungsschaltbild, und beschränkt nicht die räumliche Anordnung des Bypasskanals 230. In Figur 5 sind exemplarisch zwei Bypasskanäle 230 dargestellt. Das Schaltventil kann auch zwei, drei , vier oder n Bypasskanäle aufweisen, wobei n jede natürliche Zahl größer 0 sein kann. Es gibt keine theoretische Grenze, aber in der Praxis sind kleine natürliche Zahlen bevorzugt, z.B. 1 ≤ *n* ≤ *nₘₐₓ,* wobei *nₘₐₓ* ∈ {100, 75, 50, 25,10, 5, 4, 3, 2, 1} sein kann. Der wenigstens eine Bypasskanal 230 kann die erste Einlassöffnung 223 mit der ersten Auslassöffnung 213 kommunizierend verbindet. Der wenigstens eine Bypasskanal 230 zweigt von einem einlassseitig des ersten Ventilsitzes 212 angeordneten Abschnitt 210a des ersten Strömungspfads abzweigen und hat eine Bypassmündung 232, die in den weiteren Abschnitt des Strömungspfads einmündet. Der Bypass Einlass 231 kann sich im Ventilsitz 212 befinden. Durch den wenigstens einen Bypasskanal 230 ist es möglich, dass in der Geschlossenstellung des ersten Ventils 200 die Einlassöffnung 223 mit der Auslassöffnung 213 kommunizierend verbunden ist. Die Bypassmündung 232 kann auslassseitig des ersten Strömungspfads in einen auslassseitigen Abschnitt 210b des ersten Strömungspfads münden. Der wenigstens eine Bypasskanal 230 kann eine kleinere minimale Querschnittsfläche als der sich auslassseitig der Bypassmündung 232 erstreckenden Abschnitts 210b des ersten Strömungspfads haben. Der wenigstens eine Bypasskanal 230 kann eine beispielsweise eine Durchgangsbohrung sein oder aufweisen. Die Durchgangsbohrung kann z.B. neben der Ventilsitzöffnung 214 einen Ringsteg 219 der Ventilhülse 210 in axialer Richtung durchsetzen, d.h. die beiden Stirnseiten des Ringstegs 219 miteinander verbinden.

Das Schaltventil 200 ist Teil einer elektromechanischen Ventilanordnung 100 (kurz "Ventilanordnung"). Diese Ventilanordnung 100 weist zudem ein Steuerventil 300 auf. Das Steuerventil 300 wird hierin zu lediglich zur sprachlichen Abgrenzung auch als zweites Ventil 300 bezeichnet. Das Steuerventil 300 kann den oder Abfluss einer Ventilanordnung Steuern, d.h. es kann den Fluidfluss freigeben oder sperren. Das Schaltventil hingegen dient zum Schalten (Verstellen) des Druckabfalls sofern das zweite Ventil offen ist, um somit zwischen der Abgabe von Schaum oder "Nicht-Schaum" umstellen zu können. Das zweite Ventil 300 hat wie üblich eine Einlassöffnung 323 und eine Auslassöffnung 313. Das erste Ventil 200 ist mit dem zweiten Ventil 200 zu einer Ventilanordnung 100 verbunden sein. Mit verbunden ist hierbei keine mechanische Verbindung gemeint, sondern dass zwischen dem ersten Ventil 200 und dem zweiten Ventil 300 eine Fluidkommunikation besteht, die Ventile also fluidleitend verbunden sind. Vorzugsweise sind das erste Ventil 200 und das zweite Ventil 300 koaxial verbunden. Das erste Ventil 200 und das zweite Ventil 300 können hintereinander entlang der Strömungsrichtung 400 in Reihe verbunden sein. Wie in Figur 5 exemplarisch dargestellt kann das zweite Ventil 300, in Strömungsrichtung 400, vor dem ersten Ventil 200 angeordnet sein. Der erste Einlass 213 (der Einlass des Schaltventils) ist mit einer zweiten Auslassöffnung 313 (der Auslassöffnung des Steuerventils) verbunden. Natürlich können das erste Ventil 200 und das zweite Ventil 300 auch aneinander mechanisch befestigt sein. Wie in Figur 5 exemplarisch gezeigt kann das zweite Ventil auf das erste Ventil aufgesteckt sein. Hierbei wird das Auslassseitige Ende der zweiten Ventilhülse 310 auf das einlassseitige Ende des ersten festen Ankers 220 aufgesteckt und beispielsweise verklemmt. Beispielsweise kann das erste Ventil 200 mit dem zweiten Ventil 300 auch über ein Gewinde verbunden sein.

Das zweite Ventil 300 weist ein zweites Ventilgehäuse 380 auf. Das zweite Ventilgehäuse 380 hat eine zweite Auslassöffnung 313. Zudem weist das zweite Ventil 300 einen zweiten festen Anker 320 und eine zweite Einlassöffnung 323 auf. Die zweite Ventilhülse 300 definiert eine zweite Ventilachse L₂. Vorzugsweise haben das erste Ventil 200 und das zweite Ventil 300 eine gemeinsame Achse. Es ist jedoch auch möglich, dass die erste Ventilachse und die zweite Ventilachse zueinander in einem stumpfen oder spitzen Winkel angeordnet sind.

Das zweite Ventil 300 hat einen zweiten Strömungspfad. Der Strömungspfad verbindet die zweite Einlassöffnung 323 mit der zweiten Auslassöffnung 314 Zudem hatdas zweite Ventil 300 einen zweiten Ventilsitz 312. Der zweite Ventilsitz 312 kann zumindest einen Abschnitt des zweiten Strömungspfads radial begrenzen. Der zweite Ventilsitz 312 kann eine zweite Ventilsitzöffnung 314 umschließen. Der zweite Strömungspfad kann durch die zweite Ventilsitzöffnung 314 verlaufen.

Das zweite Ventil 300 weist einen zweiten beweglicher Anker 340 auf. Der zweite bewegliche Anker 340 ist entlang der zweiten Ventilachse L₂ in dem zweiten Ventilgehäuse 380 zwischen einer zweiten Geschlossenstellung und einer zweiten Offenstellung verschiebbar gelagert. Alternativ oder zusätzlich kann der zweite bewegliche Anker 340 in Bezug auf die zweite Ventilachse L₂ einen Winkel von 30° - 90°, insbesondere 60° bis 90° aufweisen. Ein Winkel von 90° ist besonders bevorzugt, wobei Abweichungen von ±15° oder ±10°, oder ±5° oder ±2.5° oder ±1° zulässig sind und kleinere Abweichungen bevorzugt sind. Der zweite bewegliche Anker 340 kann in der ersten Geschlossenstellung die zweite Ventilsitzöffnung 314 verschließen und in der ersten Offenstellung den zweiten Strömungspfad durch die zweite Ventilsitzöffnung 314 freigeben. In Figur 5 ist exemplarisch eine Offenstellung des zweiten Ventils 300 dargestellt. Ein zweiter elektromechanischer Antrieb 350 wirkt auf den zweiten beweglichen Anker 340, um diesen zwischen der zweiten Offenstellung und der zweiten Geschlossenstellung zu verschieben. Der zweite elektromechanische Antrieb 350 kann entsprechend dem ersten elektromechanischen Antrieb 250 ausgebildet sein. Bei geschlossener zweiter Ventilsitzöffnung 314 kann keine Fluidverbindung zwischen der zweiten Einlassöffnung 323 und der zweiten Auslassöffnung 313 bestehen.

Der erste und/oder der zweite feste Anker 220, 320 kann zwei Stirnflächen 226, 227, 326, 327 und einen die Stirnflächen entlang der ersten und/oder zweiten Ventilachse L₁, L₂ verbindenden ersten und/oder zweiten Durchgangskanal 221, 321 haben. Die dem ersten und/oder der zweiten beweglichen Anker 240, 340 abgewandte Öffnung des entsprechenden Durchgangskanals 221, 321 kann im Beispiel des stromlos geschlossenen Ventils die Einlassöffnung 223 des Ventilgehäuses bilden. Die dem ersten und/oder der zweiten beweglichen Anker 240, 340 zugewandte Öffnung des entsprechenden Durchgangskanals 221, 321 kann im Beispiel des stromlos geschlossenen Ventils die auslassseitige Öffnung 224, 324 des Durchgangskanals 221, 321 bilden. Der erste und/oder zweite Durchgangskanal 221, 321 kann in radialer Richtung von einer entsprechenden Kanalwandung 222, 322 begrenzt werden und kann bei geöffnetem Ventil durchströmt werden. Zudem kann der erste und/oder der zweite feste Anker 220, 320 eine erste und/oder zweite Mantelfläche 225, 325 aufweisen, die die beiden Stirnflächen 226, 227, 326, 327 verbindet. Die Mantelfläche 225, 325 ist vorzugsweise zumindest in einem Abschnitt kreiszylindrisch.

Die erste und/oder der zweite Ventilhülse 210, 310 kann eine erste und/oder zweite Innenwandung 215, 315, eine erste und/oder zweite Außenwandung 211, 311 und eine erste und/oder zweite Durchlassöffnung an ihrer dem ersten und/oder zweiten festen Anker 220, 320 abgewandten Stirnseite aufweisen. Bei der hier angenommenen Vorzugsströmungsrichtung wäre die DurchlassÖffnung die Auslassöffnung. Bei einem stromlos geschlossenen Ventil kann Durchlassöffnung zugleich die Ventilsitzöffnung 214, 314 sein. Die Durchlassöffnung ist vorzugsweise koaxial zur entsprechenden Ventilachse. Der erste und/oder zweite Ventilsitz 212, 312 und die erste und/oder zweite Ventilhülse 210, 310 können einstückig sein. Bei großen Stückzahlen bietet es sich alternativ an die erste und/oder zweite Ventilhülse 210, 310 aus einem (z.B. nahtlos gezogenen) Rohr zu fertigen und den entsprechenden Ventilsitz 212, 312 daran zu befestigen, z.B. durch Einpressen, Verschrauben, Verschweißen, Einbördeln oder dgl.

Der erste und/oder der zweite feste Anker 220, 320 kann einlassseitig in die erste und/oder zweite Ventilhülse 210, 310 eingreifen. Darunter ist zu verstehen, dass ein ventilhülsenseitiger Bereich des ersten und/oder der zweiten festen Ankers 220, 320 in einen ankerseitigen (bezogen auf den ersten und/oder der zweiten festen Anker 220, 320) Bereich der Ventilhülse 210, 310 eingreift. Bevorzugt kann die erste und/oder der zweite Ventilhülse 210, 310 ein erstes Gewinde und der erste und/oder der zweite feste Anker 220, 320 ein komplementäres zweites Gewinde aufweisen. Im montierten Zustand greifen dann das erste Gewinde und das zweite Gewinde ineinander ein. Beispielsweise kann die erste und/oder der zweite Ventilhülse 210, 310 ein Innengewinde und der erste und/oder der zweite feste Anker 220, 320 ein Außengewinde haben. Es ist ebenso auch möglich, dass der erste und/oder der zweite feste Anker 220, 320 ein Innengewinde und die erste und/oder der zweite Ventilhülse 210, 310 ein Außengewinde aufweist (dann greift die Ventilhülse in den Anker ein). Eine Verbindung durch Verkleben, Verschweißen oder Klemmen ist alternativ oder zusätzlich möglich.

Der erste und/oder der zweite bewegliche Anker 240, 340 hat vorzugsweise zumindest eine entsprechende Mantelfläche 243, 343, eine dem ersten und/oder der zweiten Ventilsitz 212, 312 abgewandte Stirnfläche 245, 345, eine dem ersten und/oder der zweiten Ventilsitz 212, 312 zugewandte Seite 246, 346 und eine entsprechende Innenwandung. Die erste und/oder zweite Mantelfläche 243, 343 des ersten und/oder der zweiten beweglichen Ankers 240, 340 wird nachfolgend nur zur sprachlichen Abgrenzung gegenüber der Mantelfläche des erste und/oder der zweite festen Ankers 220, 320 als "Außenfläche" bezeichnet. In dem Beispiel eines stromlos geschlossenen Ventils, wie in Figur 5 exemplarisch gezeigt, wäre die dem ersten und/oder zweiten Ventilsitz 212, 312 abgewandte entsprechende Stirnfläche 245, 345 die einlassseitige Stirnfläche, wobei sich einlassseitig auf den Fluideinlass des Ventilgehäuses bezieht. Die dem ersten und/oder zweiten Ventilsitz 212, 312 zugewandte Stirnfläche 246, 346 wäre entsprechend die auslassseitige Stirnfläche des ersten und/oder der zweiten festen Ankers 220, 320. Entsprechend werden die Stirnflächen 226, 227, 326, 327 des ersten und/oder der zweiten festen Ankers 220, 320 und andere Elemente des Ventils mit Bezug auf die Einlass- bzw. Auslassöffnung des Ventilgehäuses benannt. Beinhaltert der elektromechanische Antrieb 250, 350 ein elastisches Vorspannelement, kann dieses Vorspannelement eine Feder, beispielsweise eine Schraubenfeder, sein. Wie schon beschrieben kann der elektromechanischen Antrieb einen Aktuator beinhalten.

Bevorzugt hat das erste und/oder der zweite Ventil 200, 300 einen ersten und/oder zweiten Spulensitz. Der erste und/oder zweite Spulensitz kann z.B. von zumindest einem Segment der ersten und/oder zweiten Außenwandung 211, 311 der ersten und/oder der zweiten Ventilhülse 210, 310 und zumindest einem Segment der ersten und/oder zweiten Mantelfläche 225, 325 des ersten und/oder der zweiten festen Ankers 220, 320 gebildet werden. Auf diesen Spulensitz kann erster und/oder zweiter Magnet, beispielsweise ein Elektromagnet 270, 370 aufgesetzt werden. Wird der entsprechende Elektromagnet 270, 370 erregt, so wird bei einem stromlos geschlossenen Magnetventil der erste und/oder der zweite bewegliche Anker 240, 340 in Richtung des erste und/oder der zweite festen Ankers 220, 320 gegen eine Kraft, beispielsweise eines ersten und/oder zweiten Vorspannelements parallel zur Ventilachse verschoben, wodurch der ansonsten verschlossene Auslass des Ventilsitz 212, 312 es freigegeben wird. Das Ventil kann nun koaxial von dem zu steuernden Fluid durchströmt werden

An dem ersten und/oder der zweiten beweglichen Anker 240, 340 kann eine erste und/oder zweite Ventilsitzdichtung 260, 360 befestigt sein, die in der Geschlossenstellung an dem ersten und/oder der zweiten Ventilsitz 212, 312 anliegt und dadurch die erste und/oder zweite Ventilsitzöffnung 214, 314 verschließt. In der Offenstellung kann zwischen der Ventilsitzdichtung 260, 360 und dem Ventilsitz 212, 312 ein Spalt ausgebildet werden, durch den das Fluid in oder aus der Ventilsitzöffnung 214, 314 hinein bzw. aus ihr heraus fließen kann. Die Ventilsitzdichtung 260, 360 kann beispielsweise die Form eines Kreiszylinders haben, wobei die Deckfläche des Zylinders am ersten und/oder zweiten festen Anker 220, 320 anliegt und die Grundfläche in der Geschlossenstellung am Ventilsitz 212, 312 anliegt. Vorzugsweise ist der Radius dieses Zylinders geringer als dessen Höhe. Natürlich kann die Ventilsitzdichtung 260, 360 auch andere Formen haben, beispielsweise kann die Ventilsitzdichtung 260, 360 ein elliptischer Zylinder sein oder jede andere Form haben, sofern eine Abdichtung der Ventilsitzöffnung 214, 314 gewährleistet ist.

Vorzugsweise bilden die Außenfläche 243, 343 des ersten und/oder der zweiten beweglichen Ankers 240, 340 und die Innenwandung 215, 315 der ersten und/oder der zweiten Ventilhülse 210, 310 ein Gleitlager aus. Das optionale Gleitlager schränkt den Freiheitsgrad des ersten und/oder der zweiten beweglichen Ankers 240, 340 orthogonal zur ersten und/oder der zweiten Ventilachse L₁, L₂ ein, wodurch der erste und/oder der zweite bewegliche Anker 240, 340 besonders zuverlässig in der ersten und/oder der zweiten Ventilhülse 210, 310 geführt werden kann. Dadurch kann eine zuverlässiges Öffnen und Schließen des ersten und/oder zweiten Ventils 200, 300 gewährleistet werden. Die Außenfläche kann auf einem dem ersten und/oder der zweiten Ventilsitz 212, 312 zugewandten Abschnitt verjüngt sein, d.h. eine kleinere Querschnittsfläche umschließen. Dadurch ergibt sich zwischen der Innenwandung 215 ,315, der ersten und/oder der zweiten Ventilhülse 210, 310 und der verjüngten Außenfläche des ersten und/oder der zweiten beweglichen Ankers 240, 340 ein Freiraum. In der verjüngten Außenfläche kann wenigstens eine Fluidleitung 242, 342 münden.

Beispielsweise kann der erste und/oder der zweite bewegliche Anker 240, 340 auf seiner dem ersten und/oder der zweiten Ventilsitz 212, 312 zugewandten Seite einen geringeren Durchmesser als im sich daran anschließenden Bereich des ersten und/oder der zweiten beweglichen Ankers 240, 340 haben.

Der erste und/oder der zweite bewegliche Anker 240, 340 kann in einer dem ersten und/oder dem zweiten Ventilsitz 212, 312 abgewandten Stirnfläche 245, 345 ein sich parallel zu der Ventilachse erstreckendes erstes und/oder zweites Sackloch 241, 341 haben. In diesem Fall ist mit *"parallel"* die räumliche Anordnung des ersten und/oder zweiten Sacklochs 241, 341 gemeint. Das entsprechende Sackloch 241, 341 kann eine von der ersten und/oder zweiten einlassseitigen Stirnfläche245, 345 des ersten und/oder der zweiten beweglichen Ankers 240, 340 ausgehende und zu dessen Längsachse, welche der entsprechenden Ventilachse L₁, L₂ koaxiale Sackbohrung sein. Bevorzugt ist das erste und/oder zweite Sackloch 241, 341 zylindrisch. Natürlich kann das erste und/oder zweite Sackloch 241, 341 aber auch gefräst sein und muss nicht zylindrisch sein. Wie üblich ist unter einem Sackloch eine zu der Ventilachse koaxiale Ausnehmung zu verstehen, die das Werkstück nicht vollständig durchdringt wie eine Durchgangsbohrung und folglich also eine bestimmte Tiefe hat. Alternativ kann das erste und/oder zweite Sackloch 241, 341 auch als eine Durchgangsbohrung ausgebildet sein, die Ventilsitzseitig durch die erste und/oder zweite Ventilsitzdichtung 260, 360 verschlossen ist. Im Folgenden schließt der Begriff "Sackloch" diese Möglichkeit mit ein.

Das erste und/oder zweite Sackloch 241, 341 ist über die wenigstens eine Fluidleitung 242, 342 mit einem Freiraum auf der dem ersten und/oder zweiten Ventilsitz 212, 312 zugewandten Seite des ersten und/oder der zweiten beweglichen Ankers 240, 340 kommunizierend verbunden. Von dem ersten und/oder zweiten Sackloch 241, 341 können auch zwei oder mehr Fluidleitungen 242, 342 abzweigen, die das entsprechende Sackloch 241, 341 mit dem Freiraum kommunizierend verbinden. Anders formuliert, kann der Freiraum, auf der dem ersten und/oder dem zweiten Ventilsitz 212, 312 zugewandten Seite des ersten beweglichen Ankers 240, 340 beispielsweise durch eine verjüngte Außenfläche des ersten und/oder des zweiten beweglichen Ankers 240, 340 im Bereich des ersten und/oder zweiten Ventilsitz 212, 312es gebildet werden und die entsprechenden Fluidleitungen 242, 342 können ausgehend vom Sackloch 241, 341 in Ausnehmungen in der verjüngte Außenfläche des ersten und/oder zweiten beweglichen Ankers 240, 340 münden. Die wenigstens eine Fluidleitung 242, 342 kann in wenigstens einer (z.B. ringnutförmigen) Ausnehmung auf der verjüngten Außenfläche münden. Wenn mehrere Fluidleitungen 242, 342 vorgesehen sind, münden diese bevorzugt in der gleichen Ringnut. Besonders bevorzugt beträgt der Winkel zwischen den Achsen der Ausnehmungen und der Achse der Sackbohrung zwischen 90° und 165°, insbesondere zwischen 105° und 155°. Die Fluidleitung 242, 342 kann in Bezug auf die erste und/oder zweite Ventilachse in Richtung der Auslassöffnung einen Winkel von 30° - 90°, insbesondere 30° bis 45° aufweisen. Ein Winkel von 30° ist besonders bevorzugt, wobei Abweichungen von ±15° oder ±10°, oder ±5° oder ±2.5° oder ±1° zulässig sind und kleinere Abweichungen bevorzugt sind.

Der wenigstens eine Bypasskanal 230 kann den Freiraum auf der dem ersten Ventilsitz 212 zugewandten Seite des ersten beweglichen Ankers 240 mit der Auslassöffnung kommunizierend verbinden.

Die einander gegenüberliegenden entsprechenden Stirnflächen 226, 227, 326, 327 des ersten und/oder zweiten festen Ankers 220, 320 und des ersten und/oder zweiten beweglichen Ankers 240, 340 begrenzen vorzugsweise einen von der Innenwandung der ersten und/oder zweiten Ventilhülse 210, 310 umschlossenen Hohlraum in axialer Richtung. Der Hohlraum kann zumindest näherungsweise zylindrisch sein, bevorzugt zumindest näherungsweise kreiszylindrisch. Bei einem stromlos geschlossenen Magnetventil verbindet der Hohlraum die auslassseitige Öffnung 224, 324 des Durchgangskanals 221, 321 mit der einlassseitigen Öffnung des Sacklochs 241, 341 kommunizierend, wodurch ein Fluid vom Einlass durch den Durchgangskanal 221, 321 über den Hohlraum in das Sackloch 241, 341 strömen kann. Vom Sackloch 241, 341 gelangt das Fluid über die wenigstens eine Verbindungsleitung, beispielsweise eine Fluidleitung, in den auslassseitig des ersten und/oder zweiten beweglichen Ankers 240, 340 gebildeten Freiraum.

Vorzugsweise greift der erste und/oder zweite feste Anker 220, 320 mit seiner dem ersten und/oder zweiten beweglichen Anker zugewandten Stirnfläche 227, 327 in die Ventilhülse 210, 310 ein.

Ein Abschnitt des ersten und/oder zweiten festen Ankers 220, 320 kann in einen ihm zugewandten Abschnitt der ersten und/oder zweiten Ventilhülse 210, 310 eingreifen. Der in die entsprechende Ventilhülse 210, 310 eingreifende Abschnitt des ersten oder zweiten festen Ankers 220, 320 kann vorzugsweise verjüngt sein. Dadurch kann der in die entsprechende Ventilhülse 210, 310 eingreifenden Abschnitt des ersten und/oder zweiten festen Ankers 220, 320 angrenzende Abschnitt des ersten und/oder zweiten festen Ankers 220, 320 einen axialen Anschlag ausbildet. Der Anschlag kann an einer ankerseitigen Stirnfläche der ersten und/oder zweiten Ventilhülse 210, 310 (bezogen auf den festen Anker 220, 320) anliegen.

Der erste und/oder zweite feste Anker 220, 320 kann einen einlassseitigen (dem entsprechenden beweglichen Anker 240, 340 abgewandten) Abschnitt, mit einem ersten Durchmesser, einen mittleren Abschnitt mit einem zweiten Durchmesser und einen ventilhülsenseitigen Abschnitt mit einem dritten Durchmesser aufweisen. Der Durchmesser des ersten und/oder zweiten festen Ankers 220, 320 entspricht hierbei dem Abstand zwischen den Schnittpunkten einer orthogonal durch die Ventilachse verlaufenden Geraden mit der ersten und/oder zweiten Mantelfläche 225, 325 des ersten und/oder zweiten festen Ankers 220, 320. Der Durchmesser des mittleren Abschnitts kann größer sein als der Durchmesser des ventilhülsenseitigen Abschnitts des ersten und/oder zweiten festen Ankers 220, 320. Der Durchmesser des einlassseitigen Abschnitts des ersten und/oder zweiten festen Ankers 220, 320 kann kleiner oder gleich dem Durchmesser des mittleren Abschnitts sein. Vorzugsweise kann der Durchmesser des hülsenseitigen und einlassseitigen Abschnitts in etwa gleich groß sein. Am Übergang des mittleren Abschnitts zum ventilhülsenseitigen Abschnitt des ersten und/oder zweiten festen Ankers 220, 320 kann sich durch die unterschiedlichen Durchmesser eine sich in radialer Richtung erstreckende Schulter ausbilden. Die Schulter kann zur Begrenzung der axialen Bewegung des ersten und/oder zweiten festen Ankers 220, 320 entlang der entsprechenden Ventilachse L₁, L₂ dienen. Die Schulter kann beispielsweise eine umlaufende Schulter sein und einen Axialanschlag, z.B. für die ankerseitige Stirnfläche der ersten und/oder zweiten Ventilhülse 210, 310 ausbilden.

Die ersten und/oder zweiten Ventilhülse 210, 310 kann eine zur Schulter komplementäre Anschlagsfläche haben. Die komplementäre entsprechende Anschlagsfläche kann eine ankerseitige Stirnfläche der ersten und/oder zweiten Ventilhülse 210, 310 sein. Die ankerseitige Stirnfläche der ersten und/oder zweiten Ventilhülse 210, 310 kann einer einlassseitigen Stirnfläche der ersten und/oder zweiten Ventilhülse 210, 310 entsprechen. Die ankerseitige Stirnfläche der ersten und/oder zweiten Ventilhülse 210, 310 kann beispielsweise ein Anschlag sein. Die ankerseitige erste und/oder zweite Stirnfläche 216, 316 der ersten und/oder zweiten Ventilhülse 210, 310 kann einer dem entsprechenden Ventilsitz 212, 312 abgewandten Stirnfläche der ersten und/oder zweiten Ventilhülse 210, 310 entsprechen. Wie üblich wird unter einem Anschlag ein Widerlager verstanden, dass eine Bewegung begrenzt. Durch entsprechenden den Anschlag wird hier der Endpunkt der axialen Bewegung der ersten und/oder zweiten Ventilhülse 210, 310 relativ zum ersten und/oder zweiten festen Anker 220, 320 beim Einschieben des ventilhülsenseitigen Abschnitts des ersten und/oder zweiten festen Ankers 220, 320 in die erste und/oder zweite Ventilhülse 210, 310 festgelegt. Die auslassseitige Fläche der Schulter kann an der ankerseitigen Stirnfläche 216, 316 der ersten und/oder zweiten Ventilhülse 210, 310 anschlagen. Die auslassseitige Stirnfläche der Schulter kann zusammen mit der ankerseitigen Stirnfläche 216, 316 der ersten und/oder zweite Ventilhülse 210, 310 die Hälfte eines Formschlusses bilden, d. h. der erste und/oder zweite feste Anker 220, 320, der anschlagende Körper, kann die erste und/oder zweite Ventilhülse 210, 310, den Anschlag, in Gegenrichtung wieder verlassen. Natürlich kann auch die erste und/oder zweite Ventilhülse 210, 310 als anschlagender Körper und der erste und/oder zweite feste Anker 220, 320 als Anschlag definiert werden.

Das erste und/oder zweite Sackloch 241, 341 des ersten und/oder zweiten Ventils 200, 300 kann beispielsweise eine axial gestufte Bohrung sein. Das erste und/oder zweite Sackloch 241, 341 kann einen ersten einlassseitigen Abschnitt mit einem ersten Durchmesser und einen sich auslassseitig daran anschließenden zweiten Abschnitt haben, der einen zweiten Durchmesser hat. Der erste Abschnitt und der zweite Abschnitt können unterschiedliche Durchmesser haben. Bevorzugt ist der erste Durchmesser größer als der zweite Durchmesser. Dadurch wird am Übergang vom größeren ersten Durchmesser zu dem kleineren zweiten Durchmesser eine Widerlagerfläche ausgebildet. Ist der erste und/oder zweite elektromechanische Antrieb 250,350 beispielsweise ein elastisches Vorspannelement, wie eine Feder, stütz sich das elastische Vorspannelements auslassseitig an der Widerlagerfläche ab. Einlassseitig kann das Vorspannelement vorzugsweise an der entsprechenden auslassseitigen Stirnfläche 227, 327 des ersten und/oder zweiten festen Ankers 220, 320 anliegen, so dass das Vorspannelement den ersten und/oder zweiten beweglichen Anker 240, 340 in Richtung des Ventilauslasses vorspannt. Alternativ oder zusätzlich kann der elektromechanische Antrieb ein Aktuator sein. Der Aktuator kann am ersten und/oder zweiten beweglichen Anker 240, 340 angeordnet sein. Der Aktuator kann an der Außenfläche des ersten und/oder zweiten beweglichen Ankers 240, 340, im ersten Abschnitt oder im zweiten Abschnitt des ersten und/oder zweiten beweglichen Ankers 240, 340 angeordnet sein. Der Aktuator kann zudem innerhalb des ersten und/oder zweiten beweglichen Ankers 240, 340, im ersten Abschnitt oder im zweiten Abschnitt des ersten und/oder zweiten beweglichen Ankers 240, 340 und an der Innenwandung des ersten und/oder zweiten beweglichen Ankers 240, 340 angeordnet sein.

Beinhaltet der elektromechanische Antrieb 250, 350, beispielsweise ein elastische Vorspannelement, sitzt das elastische Vorspannelement vorzugsweise zwischen dem ersten und/oder zweiten festen Anker 220, 320 und dem ersten und/oder zweiten beweglichen Anker 240, 340.

Das erste und/oder zweite Ventil kann zudem ein einlassseitiges an den ersten und/oder zweiten festen Anker 220, 320 befestigtes Fitting 330 haben. Das Fitting 330 kann mit dem ersten und/oder zweiten festen Anker 220, 320 durch Kraftschluss, Formschluss oder Stoffschluss verbunden werden. Das Fitting 330 kann mit dem ersten und/oder zweiten festen Anker 220, 320 beispielsweise durch Verschrauben, Löten und Schweißen verbunden werden. Natürlich können das Fitting 330 und der ersten und/oder zweiten festen Anker 220, 320 auch einstückig ausgebildet sein. Das Fitting 330 kann einen Flansch, einen Durchlass 331 (dem Fittingkanal), eine ankerseitige Stirnfläche 332 und eine dem ersten und/oder zweiten festen Anker 220, 320 abgewandte Stirnfläche haben. Das Fitting 330 kann eine ankerseitige Stirnfläche 332 mit einem Durchlass 331 haben. Der Durchlass kann koaxial zur ersten und/oder zweiten Ventilachse sein. Das Fitting 300 kann an dem vorderen Ventil angeordnet sein, wenn die Ventile entlang der Strömungsrichtung in Reihe angeordnet sein.

Das Fluid kann durch den Durchlass 331 des Fittings 330, auch Fittingkanal genannt, in den Einlass des ersten und/oder zweiten Ventilgehäuses strömen. Der Fittingkanal 331 hat eine den Kanal in radialer Richtung begrenzende Fittingkanalwandung. Der Fittingkanal 331 kann in der ankerseitigen Stirnfläche des Fittings münden. Der Fittingkanal 331 kann koaxial zur ersten und/oder zweiten Ventilachse L₁, L₂ sein. Vorzugsweise kann der Fittingkanal 331 koaxial zum Durchgangskanal 221, 321 sein. Vorzugsweise ist das Fitting 330 mit dem zweiten Ventil 300 verbunden.

Ein erster und/oder zweiter Magnet 270, 370, beispielsweise ein Elektromagnet, kann auf dem Spulensitz des ersten und/oder zweiten Ventils 200, 300 angeordnet sein.

Der Magnet 270, 370 kann zusammen mit Polblechen auf das erste und/oder zweite Ventilgehäuse 200, 300 und den ersten und/oder zweiten festen Anker 220, 320 koaxial aufschiebbar sein. Dies kann eine einfache Montage des entsprechenden Magneten 270, 370 ermöglichen. Zudem kann der Magnet 270, 370, wenn das Ventil 200, 300 von einem kalten Fluid durchströmt wird, gekühlt werden. Das erste Ventil 200 und/oder das zweite Ventil 300 können einen Anschluss 275, 375 aufweisen. Der Anschluss 275, 375 kann die Magnete 270, 370 mit Energie versorgen.

Der erste und/oder zweite Magnet 270, 370 kann gegen ein unbeabsichtigtes axiales Verschieben gesichert sein. Die erste und/oder zweite Ventilhülse 210, 310 kann auslassseitig einen Flansch 218, 318 haben, an dem sich der Magnet270, 370 abstützt. Einlassseitig kann der Magnet entweder durch eine Mutter oder einen weiteren Flansch fixiert sein. Bevorzugt hat das erste und/oder zweite Ventilgehäuse einen Flansch mit Schlüsselflächen und der erste und/oder zweite feste Anker 220, 320 ein Außengewinde, auf das das Fitting 330 aufschraubbar ist. So lässt sich zum Abschluss der Montage des Ventils der Magnet auf das erste und/oder zweite Ventilgehäuse bis zum Anschlag am Flansch des erste und/oder zweite Ventilgehäuses aufschieben und mit dem Fitting gegen Verrutschen sichern.

Vorzugsweise können die erste und/oder zweite Ventilhülse 210, 310 und der erste und/oder zweite feste Anker 220, 320 jeweils auf der dem Elektromagneten 270, 370 abgewandten Seite ein Innen- und/oder ein Außengewinde, auf das handelsübliche Anschlussstücke aufgeschraubt werden können, haben. Ist die erste und/oder zweite Mantelfläche 225, 325 des ersten und/oder zweiten festen Ankers 220, 320 und/oder die entsprechende Außenwandung 211, 311 des ersten und/oder zweiten Ventilgehäuses an seinem dem Magneten abgewandtem Ende jeweils verjüngt, so kann dort ein Dichtring aufgeschoben werden, der von dem Gewinde eines Anschlussstückes, beispielsweise dem zuvor genannten Fitting übergriffen wird.

Die erste und/oder zweite Ventilhülse 210, 310, die ersten und/oder zweiten festen Anker 220, 320, die ersten und/oder zweiten beweglichen Anker 240, 340 und das Fitting 330 können sämtlich als Drehteile herstellbar sein, d.h. die Ventilgehäuse müssen nicht mehr gegossen oder geschmiedet werden. Das vereinfacht die Fertigung und erhöht die Flexibilität gegenüber Kundenwünschen.

Das erste und/oder zweite Ventil 200, 300 kann sowohl ein Gleichstrom (DC) - als auch ein Wechselstrom (AC)-Ventil sein. Bei einem AC-Ventil werden zusätzliche Phasenverschiebungsringe in den die ersten und/oder zweiten festen Anker 220, 320 eingepresst, welche bei einem DC-Ventil fehlen. Durch den fehlenden Phasenverschiebungsring hat ein DC-Ventil daher den Vorteil, dass höhere hygienische Standards bei aggressiven Medien gewährleistet werden können.

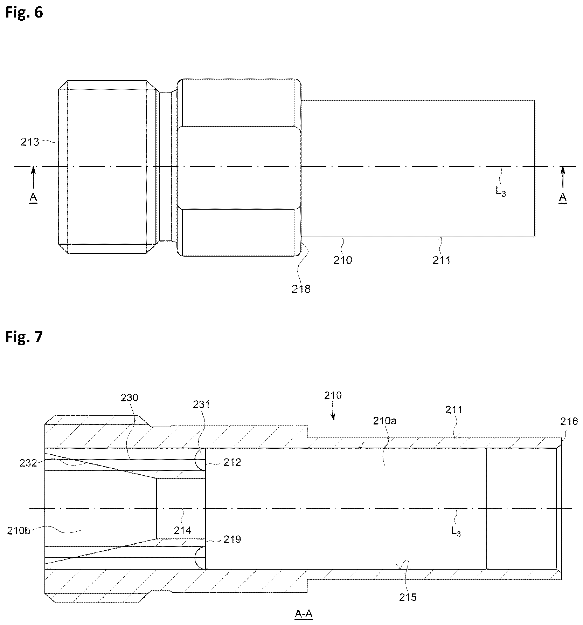

Figur 6 zeigt eine Ausführungsform einer Ventilhülse 210 des zweiten Ventils 200. Die Ventilhälse kann einen Flansch 218, eine erste Auslassöffnung 213 und eine Außenwandung 211 haben.

Figur 7 zeigt eine Ausführungsform einer geschnittenen Ventilhülse 210 des zweiten Ventils 200. Die Ventilhülse 210 kann ebenso als Hülsenkörper bezeichnet werden. Die Ventilhülse 210 kann eine Außenwandung 211, einen Ventilsitz 212, eine Auslassöffnung 213, eine Innenwandung 215, eine Stirnfläche 216, eine Anlagefläche 217 und einen Flansch 218 aufweisen. Die Ventilhülse 210 weist einen sich nach innen erstreckenden Ringsteg 219 auf. Der Ringsteg 219 kann sich in Richtung der Hülsenachse L₃ erstrecken. Der Ringsteg 219 unterteilt die Ventilhülse 210 in einen ersten Hülsenabschnitt 210a und in einen weiteren Hülsenabschnitt 210b. Der Ringsteg 219 bildet zudem einen Ventilsitz 212 aus. Der Ventilsitz 212 kann eine Ventilsitzöffnung 214 umranden, umfassen und/oder begrenzen. Die Ventilhülse 210 kann den ersten Hülsenabschnitt 210a und den weiteren Hülsenabschnitt 210b miteinander verbinden. Zudem kann die Ventilsitzöffnung 214 den ersten Hülsenabschnitt 210a und den weiteren Hülsenabschnitt 210b kommunizierend miteinander verbinden d.h. eine Fluidverbindung zwischen den beiden Hülsenabschnitten ausbilden. Die Ventilhülse 210 weist wenigstens einen Bypasskanal 230 auf, der parallel zu der Ventilsitzöffnung 214 den ersten Hülsenabschnitt 210a und den weiteren Hülsenabschnitt 210b miteinander verbindet, sodass bei geschlossener Ventilsitzöffnung 214 der erste Hülsenabschnitt 210a und der weiteren Hülsenabschnitt 210b miteinander verbunden sind. Der wenigstens eine Bypasskanal 230 kann beispielsweise eine Durchgangsbohrung sein oder aufweisen. Die Durchgangsbohrung kann z.B. neben der Ventilsitzöffnung einen Ringsteg 219 der Ventilhülse 210 in axialer Richtung durchsetzen, d.h. die beiden Stirnseiten des Ringstegs 219 miteinander verbinden. Der Bypasskanal 230 kann einen Einlass 231 und eine Bypassmündung 323 haben. Der Bypass Einlass 231 kann am Ventilsitz 212 angeordnet sein. Die Bypassmündung 232 kann in der Auslassöffnung 213 angeordnet sein. Der wenigstens eine Bypasskanal 230 kann vom ersten Hülsenabschnitt 210a abzweigen. Die Bypassmündung 232 kann in dem weiteren Hülsenabschnitt 210b münden. Der Stömungswiderstand für Wasser durch den Bypasskanal 310 kann kleiner sein als der Strömungswiderstand durch den sich auslassseitig der Bypassmündung 323 erstreckenden weiteren Hülsenabschnitt 210b. Zudem kann der Bypasskanal 320 eine kleinere minimale Querschnittsfläche (wobei die Querschnittsfläche hier quer (also orthogonal) zur Strömungsrichtung zu bestimmen ist) haben als der sich auslassseitig der Bypassmündung 232 erstreckende weitere Hülsenabschnitt 210b. Bei einem Bypasskanalabschnitt mit einer kreisförmigen Querschnittsfläche ist die minimale Querschnittsfläche die Fläche an der der Bypasskanal den kleinsten Durchmesser hat.

Bei einem sich auch geometrisch parallel zu der Hülsenachse L₃ erstreckenden Bypasskanalabschnitt wird die Querschnittsfläche durch eine Ebene definiert, die orthogonal zu der Hülsenachse L₃ steht. Bevorzugt wird die Querschnittsfläche an der Bypassmündung unstetig vergrößert. Dies hat zur Folge, dass der Strömungswiderstand und der Druck schlagartig (zumindest nahezu unstetig) abfallen. Dies ruft den bereits zum ersten Ventil beschriebenen Effekt hervor. Die Hülsenachse L₃ kann der ersten Ventilachse L₁ entsprechen. Vorzugsweise ist zumindest in einem Bypasskanalabschnitt die Längsachse des Bypasskanals parallel zur Hülsenachse L₃. Der Strömungswiderstand des wenigstens einen Bypasskanals 230 nimmt mit zunehmender Querschnittsfläche ab und mit zunehmender Länge zu. Bei einem Bypasskanal 230 mit nicht konstanter Querschnittsfläche macht es Sinn diesen als Aneinanderreihung von Bypasskanalabschnitten konstanter Querschnittsflächen zu betrachten.

### Bezugszeichenliste

- 100: Ventilanordnung
- 200: Schaltventil/erstes Ventil
- 210: erste Ventilhülse
- 210a: erster Abschnitt/ erster Hülsenabschnitt
- 210b: weiterer Abschnitt/ weiterer Hülsenabschnitt
- 211: Außenwandung der ersten Ventilhülse
- 212: erster Ventilsitz
- 213: erste Auslassöffnung
- 214: erste Ventilsitzöffnung
- 215: Innenwandung der ersten Ventilhülse
- 216: ankerseitige Stirnfläche / einlassseitige Stirnfläche der Ventilhülse / dem ersten festen Anker 220 zugewandte Stirnfläche
- 217: Auflagefläche
- 218: Flansch
- 219: Ringsteg
- L₃: Hülsenachse
- 220: erster fester Anker
- 221: Durchgangskanal
- 222: Kanalwandung
- 223: Einlassöffnung
- 224: Auslassseitige Öffnung
- 225: Mantelfläche des ersten festen Ankers
- 226: einlassseitige Stirnfläche des ersten festen Ankers
- 227: auslassseitige Stirnfläche des ersten festen Ankers
- 230: Bypasskanal
- 231: Bypasskanal Einlass
- 232: Bypassmündung
- 240: erster beweglicher Anker
- 241: Sackloch
- 242: Fluidleitung
- 243: Außenfläche des ersten beweglichen Ankers
- 245: Ventilsitz abgewandte Stirnfläche / einlassseitige Stirnfläche
- 246: Ventilsitz zugewandte Seite / auslassseitige Stirnfläche
- 247: Auflagefläche
- 250: ersten elektromechanischen Antrieb
- 260: Ventilsitzdichtung / Durchlassdichtung
- 270: erster Elektromagnet
- 275: Anschluss erster Elektromagnet
- 280: erste Ventilumfassung
- L₁: erste Ventilachse
- 300: Steuerventil/zweites Ventil
- 310: zweite Ventilhülse
- 311: Außenwandung der zweiten Ventilhülse
- 312: zweiter Ventilsitz
- 313: zweite Auslassöffnung
- 314: zweite Ventilsitzöffnung
- 315: Innenwandung der zweiten Ventilhülse
- 316: ankerseitige Stirnfläche / einlassseitige Stirnfläche der Ventilhülse / dem zweiten festen Anker 320 zugewandte Stirnfläche
- 317: Auflagefläche
- 318: Flansch
- 320: zweiter fester Anker
- 321: Durchgangskanal
- 322: Kanalwandung
- 323: Einlassöffnung
- 324: Auslassseitige Öffnung
- 325: Mantelfläche des zweiten festen Ankers
- 326: einlassseitige Stirnfläche des zweiten festen Ankers
- 327: auslassseitige Stirnfläche des zweiten festen Ankers
- 330: Fitting
- 331: Fittingkanal
- 332: ankerseitige Stirnfläche
- 340: zweiter beweglicher Anker
- 341: Sackloch
- 342: Fluidleitung
- 343: Außenfläche des zweiten beweglichen Ankers
- 345: Ventilsitz abgewandte Stirnfläche / einlassseitige Stirnfläche
- 346: Ventilsitz zugewandte Seite / auslassseitige Stirnfläche
- 347: Auflagefläche
- 350: zweiter elektromechanischer Antrieb
- 360: Ventilsitzdichtung / Durchlassdichtung
- 370: zweiter Elektromagnet
- 375: Anschluss zweiter Elektromagnet
- 380: zweites Ventilumfassung
- L₂: zweite Ventilachse
- 400: Vorzugsströmungsrichtung

## Patentansprüche

1. Elektromechanische Ventilanordnung (100) mit einem elektromechanischen Schaltventil (200) und mit einem Steuerventil (300), wobei das Schaltventil (200)
- ein erstes Ventilgehäuse mit einer ersten Ventilhülse (210), einem ersten festen Anker (220), einer ersten Einlassöffnung (223) und einer ersten Auslassöffnung (213), wobei die erste Ventilhülse (210) eine erste Ventilachse (L₁) definiert,
- einen ersten Strömungspfad, der die erste Einlassöffnung (223) mit der ersten Auslassöffnung (213) verbindet,
- einen ersten Ventilsitz (212), der eine erste Ventilsitzöffnung (214) umgibt und den ersten Strömungspfad in einen ersten Abschnitt (210a) und einen weiteren Abschnitt (210b) teilt,
- einen ersten beweglichen Anker (240), wobei der erste bewegliche Anker (240) entlang der ersten Ventilachse (L₁) oder in einem Winkel zu der ersten Ventilachse (L₁) in dem ersten Ventilgehäuse zwischen einer ersten Geschlossenstellung und einer ersten Offenstellung verschiebbar gelagert ist, wobei der erste bewegliche Anker (240) in der ersten Geschlossenstellung die erste Ventilsitzöffnung (212) verschließt und in der ersten Offenstellung den ersten Strömungspfad durch die erste Ventilsitzöffnung (212) freigibt,
- einen ersten elektromechanischen Antrieb (250), der auf den ersten beweglichen Anker (240) wirkt, um diesen zwischen der ersten Offenstellung und der ersten Geschlossenstellung zu verschieben, und
- wenigstens einen Bypasskanal (230), welcher parallel zu der ersten Ventilsitzöffnung (214) den ersten Abschnitt (210a) und den weiteren Abschnitt (210b) verbindet,
aufweist, dadurch gegenzeichnet, dass
- die erste Ventilhülse einen sich nach innen erstreckenden Ringsteg (219) aufweist, der Ringsteg (219) den Ventilsitz (212) ausbildet und die erste Ventilhülse (210) in einen ersten Hülsenabschnitt und in einen weiteren Hülsenabschnitt unterteilt,
- die erste Einlassöffnung (223) mit einer zweiten Auslassöffnung (313) verbunden ist, wobei die zweite Auslassöffnung (313) der Auslass des Steuerventils (300) ist,
- das Steuerventil (300) ein zweites Ventilgehäuse aufweist, wobei das zweite Ventilgehäuse den zweiten Ventilauslass (313) aufweist sowie einen zweiten festen Anker (320), eine zweite Einlassöffnung (323), wobei die zweite Ventilhülse (310) eine zweiten Ventilachse(L₂) definiert,
- das Steuerventil (300) einen zweiten Strömungspfad hat, und der Strömungspfad die zweite Einlassöffnung (323) mit der zweiten Auslassöffnung (313) verbindet,
- ein zweiter Ventilsitz (312) zumindest einen Abschnitt des zweiten Strömungspfads radial begrenzt,
- das Steuerventil (300) einen zweiten beweglicher Anker (340) aufweist, wobei der zweite bewegliche Anker (340) entlang der zweiten Ventilachse (L₂) oder in einem Winkel zu der zweiten Ventilachse (L₂) in dem zweiten Ventilgehäuse zwischen einer zweiten Geschlossenstellung und einer zweiten Offenstellung verschiebbar gelagert ist,
- der zweite bewegliche Anker (340) in der zweiten Geschlossenstellung die zweite Ventilsitzöffnung (314) verschließt und in der zweiten Offenstellung den zweiten Strömungspfad durch eine zweite Ventilsitzöffnung (314) freigibt,
- ein zweiter elektromechanischer Antrieb (350) auf den zweiten beweglichen Anker (340) wirkt, um diesen zwischen der zweiten Offenstellung und der zweiten Geschlossenstellung zu verschieben, und
- bei geschlossener zweiter Ventilsitzöffnung (314), keine Fluidverbindung zwischen der zweiten Einlassöffnung (323) und der zweiten Auslassöffnung (313) besteht.

2. Elektromechanische Ventilanordnung (100) nach Anspruch 1, **dadurch gekennzeichnet, dass** der Bypasskanal (230) von einem einlassseitig des ersten Ventilsitzes (212) angeordneten Abschnitt des ersten Strömungspfads abzweigt und eine Bypassmündung (232) hat, die auslassseitig des ersten Strömungspfads in einen auslassseitigen Abschnitt des ersten Strömungspfads mündet und dadurch einen sich auslassseitig der Bypassmündung (232) erstreckenden Abschnitt des ersten Strömungspfads definiert.

3. Die elektromechanische Ventilanordnung (100) nach Anspruch 2, **dadurch gekennzeichnet, dass** der Stömungswiderstand für Wasser durch den Bypasskanal (230) kleiner ist als der Strömungswiderstand durch den sich auslassseitig der Bypassmündung (232) erstreckenden Abschnitts des ersten Strömungspfads.

4. Die elektromechanische Ventilanordnung (100) nach Anspruch 2 oder 3, **dadurch gekennzeichnet, dass** der Bypasskanal (230) eine kleinere minimale Querschnittsfläche hat als der sich auslassseitig der Bypassmündung (232) erstreckenden Abschnitts des ersten Strömungspfads.

5. Die elektromechanische Ventilanordnung (100) nach einem der vorstehenden Ansprüche, **dadurch gekennzeichnet, dass** der erste Ventilsitz (212) eine die erste Ventilsitzöffnung (214) umschließt, durch welcher der erste Strömungspfad verläuft.

6. Die elektromechanische Ventilanordnung (100) nach einem der vorstehenden Ansprüche, **dadurch gekennzeichnet, dass** der zweite Ventilsitz (312) die zweite Ventilsitzöffnung (314) umschließt, durch welcher der zweite Strömungspfad verläuft.

## Claims

1. An electromechanical valve arrangement (100) with an electromechanical switching valve (200) and a control valve (300), wherein the switching valve (200) comprises
- a first valve housing having a first valve sleeve (210), a first fixed armature (220), a first inlet opening (223) and a first outlet opening (213), wherein the first valve sleeve (210) defines a first valve axis (L₁),
- a first flow path connecting the first inlet opening (223) to the first outlet opening (213),
- a first valve seat (212) surrounding a first valve seat opening (214) and dividing the first flow path into a first section (210a) and a further section (210b),
- a first movable armature (240), wherein the first movable armature (240) is supported in a displaceable manner along the first valve axis (L₁) or at an angle to the first valve axis (L₁) in the first valve housing between a first closed position and a first open position, wherein the first movable armature (240) closes the first valve seat opening (212) in the first closed position and releases the first flow path through the first valve seat opening (212) in the first open position,
- a first electromechanical drive (250) acting on the first movable armature (240) to displace it between the first open position and the first closed position, and
- at least one bypass channel (230) which connects the first section (210a) and the further section (210b) parallel to the first valve seat opening (214),
**characterized in that**
- the first valve sleeve comprises an inwardly extending annular web (219), wherein the annular web (219) forms the valve seat (212) and divides the first valve sleeve (210) into a first sleeve section and a further sleeve section,
- the first inlet opening (223) is connected to a second outlet opening (313), wherein the second outlet opening (313) is the outlet of the control valve (300),
- the control valve (300) comprises a second valve housing, wherein the second valve housing comprises the second valve outlet (313) as well as a second fixed armature (320), a second inlet opening (323), wherein the second valve sleeve (310) defines a second valve axis (L₂),
- the control valve (300) has a second flow path, and the flow path connects the second inlet opening (323) with the second outlet opening (313),
- a second valve seat (312) delimits at least a section of the second flow path radially,
- the control valve (300) comprises a second movable armature (340), wherein the second movable armature (340) is mounted in a displaceable manner along the second valve axis (L₂) or at an angle to the second valve axis (L₂) in the second valve housing between a second closed position and a second open position,
- the second movable armature (340) closes the second valve seat opening (314) in the second closed position and releases the second flow path through a second valve seat opening (314) in the second open position,
- a second electromechanical drive (350) acts on the second movable armature (340) to move it between the second open position and the second closed position, and
- when the second valve seat opening (314) is closed, there is no fluid connection between the second inlet opening (323) and the second outlet opening (313).

2. Electromechanical valve arrangement (100) according to claim 1, **characterized in that** the bypass channel (230) branches off from a section of the first flow path arranged on the inlet side of the first valve seat (212) and has a bypass opening (232) which opens on the outlet side of the first flow path into an outlet-side section of the first flow path and thereby defines a section of the first flow path extending on the outlet side of the bypass opening (232).

3. The electromechanical valve arrangement (100) according to claim 2, **characterized in that** the flow resistance for water through the bypass channel (230) is smaller than the flow resistance through the section of the first flow path extending on the outlet side of the bypass opening (232)

4. The electromechanical valve arrangement (100) according to claim 2 or 3, **characterized in that** the bypass channel (230) has a smaller minimum cross-sectional surface than the section of the first flow path extending on the outlet side of the bypass opening (232).

5. The electromechanical valve arrangement (100) according to one of the preceding claims, **characterized in that** the first valve seat (212) encloses a first valve seat opening (214) through which the first flow path extends.

6. The electromechanical valve arrangement (100) according to one of the preceding claims, **characterized in that** the second valve seat (312) encloses the second valve seat opening (314) through which the second flow path extends.

## Revendications

1. Arrangement de vanne électromécanique (100) doté d'une vanne de commutation électromécanique (200) et doté d'une vanne de commande (300), dans lequel la vanne de commutation (200) comporte
- un premier boîtier de vanne doté d'un premier manchon de vanne (210), d'une première armature fixe (220), d'une première ouverture d'entrée (223) et d'une première ouverture de sortie (213), dans lequel le premier manchon de vanne (210) définit un premier axe de vanne (L₁),
- un premier chemin d'écoulement, lequel relie la première ouverture d'entrée (223) et la première ouverture de sortie (213),
- un premier siège de vanne (212), lequel entoure une première ouverture de siège de vanne (214) et divise le premier chemin d'écoulement en une première section (210a) et en une section ultérieure (210b),
- une première armature mobile (240), dans lequel la première armature mobile (240) est disposée en coulissement entre une première position fermée et une première position ouverte dans le premier boîtier de vanne le long du premier axe de vanne (L₁) ou à un angle par rapport au premier axe de vanne (L₁), dans lequel la première armature mobile (240) ferme la première ouverture de siège de vanne (212) dans la première position fermée et libère le premier chemin d'écoulement à travers la première ouverture de siège de vanne (212) dans la première position ouverte,
- un premier entraînement électromécanique (250), lequel agit sur la première armature mobile (240) afin de déplacer celle-ci entre la première position fermée et la première position ouverte, et
- au moins un canal de dérivation (230), lequel relie la première section (210a) et la section ultérieure (210b) parallèlement à la première ouverture de siège de vanne (214),
**caractérisé en ce que**
- le premier manchon de vanne comporte un rebord annulaire (219) s'étendant vers l'intérieur, le rebord annulaire (219) réalise le siège de vanne (212) et subdivise le premier manchon de vanne (210) en une première section de manchon et en une section de manchon ultérieure,
- la première ouverture d'entrée (223) est reliée à une deuxième ouverture de sortie (313), dans lequel la deuxième ouverture de sortie (313) est la sortie de la vanne de commande (300),
- la vanne de commande (300) comporte un deuxième boîtier de vanne, dans lequel le deuxième boîtier de vanne comporte la deuxième ouverture de sortie (313) ainsi qu'une deuxième armature fixe (320), une deuxième ouverture d'entrée (323), dans lequel le deuxième manchon de vanne (310) définit un deuxième axe de vanne (L₂),
- la vanne de commande (300) possède un deuxième chemin d'écoulement, et le chemin d'écoulement relie la deuxième ouverture d'entrée (323) et la deuxième ouverture de sortie (313),
- un deuxième siège de vanne (312) délimite radialement au moins une section du deuxième chemin d'écoulement,
- la vanne de commande (300) comporte une deuxième armature mobile (340), dans lequel la deuxième armature mobile (340) est disposée en coulissement entre une deuxième position fermée et une deuxième position ouverte dans le deuxième boîtier de vanne le long du deuxième axe de vanne (L₂) ou à un angle par rapport au deuxième axe de vanne (L₂),
- la deuxième armature mobile (340) ferme la deuxième ouverture de siège de vanne (314) dans la deuxième position fermée et libère le deuxième chemin d'écoulement à travers la deuxième ouverture de siège de vanne (314) dans la deuxième position ouverte,
- un deuxième entraînement électromécanique (350) agit sur la deuxième armature mobile (340) afin de déplacer celle-ci entre la deuxième position ouverte et la deuxième position fermée, et
- lorsque la deuxième ouverture de siège de vanne (314), il n'existe aucune liaison fluidique entre la deuxième ouverture d'entrée (323) et la deuxième ouverture de sortie (313).

2. Arrangement de vanne électromécanique (100) selon la revendication 1, **caractérisé en ce que** le canal de dérivation (230) dérive d'une section du premier chemin d'écoulement disposée côté entrée du premier siège de vanne (212) et possède une embouchure de dérivation (232), laquelle débouche côté sortie du premier chemin d'écoulement dans une section côté sortie du premier chemin d'écoulement et définit ainsi une section du premier chemin d'écoulement s'étendant côté sortie de l'embouchure de dérivation (232).

3. Arrangement de vanne électromécanique (100) selon la revendication 2, **caractérisé en ce que** la résistance à l'écoulement pour l'eau à travers le canal de dérivation (230) est inférieure à la résistance à l'écoulement à travers la section du premier chemin d'écoulement s'étendant côté sortie de l'embouchure de dérivation (232).

4. Arrangement de vanne électromécanique (100) selon la revendication 2 ou 3, **caractérisé en ce que** le canal de dérivation (230) possède une surface de section minimale inférieure à la section du premier chemin d'écoulement s'étendant côté sortie de l'embouchure de dérivation (232).

5. Arrangement de vanne électromécanique (100) selon l'une des revendications précédentes, **caractérisé en ce que** le premier siège de vanne (212) entoure la première ouverture de siège de vanne (214) à travers laquelle passe le premier chemin d'écoulement.

6. Arrangement de vanne électromécanique (100) selon l'une des revendications précédentes, **caractérisé en ce que** le deuxième siège de vanne (312) entoure la deuxième ouverture de siège de vanne (314) à travers laquelle passe le deuxième chemin d'écoulement.
